# EUROPEAN PATENT APPLICATION

(11) **EP 4 791 111 A1**
(43) Date of publication of application: **12.08.2026**
(21) Application number: 24881302.4
(22) Date of filing: 13.09.2024
(51) Int. Cl.: H04W 76/15

(54) **COMMUNICATION METHOD AND COMMUNICATION APPARATUS**

(30) Priority: 27.10.2023 CN 202311425059
(71) Applicant: HUAWEI TECHNOLOGIES CO., LTD., Shenzhen 518129 (CN)
(72) Inventor: ZHANG, Roujia, Shenzhen, Guangdong 518129 (CN); SUN, Fei, Shenzhen, Guangdong 518129 (CN)
(74) Representative: Gill Jennings & Every LLP
(86) International application number: PCT/CN2024/118817
(87) International publication number: WO 2025/086936

(57) **Abstract**

A communication method includes: receiving, from a terminal device, a first request message for requesting to set up a first PDU session associated with a first network slice, where the first request message includes an identifier of the first network slice and an identifier of a second network slice; determining, by a core network element based on configuration information and in response to the first request message, that a first cell is located outside a service area of the second network slice, and that there is at least one network slice with an available resource in the first cell; determining, by the core network element, a third network slice from the at least one network slice; establishing a second PDU session using a resource configured for the third network slice in the first cell, where the second PDU session provides the terminal device with a service provided by the first PDU session. This method enables successful PDU session setup associated with a network slice even when a serving cell of the terminal device is outside a service area of a network slice, by dynamically identifying a network slice with an available resource in the cell.

## Description

This application claims priority to Chinese Patent Application No. 202311425059.0, filed with the China National Intellectual Property Administration on October 27, 2023 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

With development of mobile communication technologies, various new services and application scenarios continuously emerge. These services have significantly different requirements on network functions, connection performance, security, and the like. Relying on a single network to carry these services makes it challenging to ensure high bandwidth, low latency, and high reliability. Conversely, building a separate network for each type of service results in huge costs. This requires a 5th generation (5th generation, 5G) communication system to be both flexible and scalable while capable of meeting different service requirements. To this end, the 5G communication system uses end-to-end network slices (network slices) to provide customized network services to users.

Specifically, when an allowed (allowed) network slice encounters congestion or becomes unavailable on a network side, an alternative (alternative) network slice is introduced to ensure service continuity for terminal devices. Therefore, a terminal device may include both single network slice selection assistance information (single network slice selection assistance information, S-NSSAI) of the allowed network slice and S-NSSAI of the alternative network slice in a protocol data unit (protocol data unit, PDU) session setup request. This allows the network to set up a PDU session associated with the alternative network slice to serve the terminal device, instead of a PDU session associated with the allowed network slice.

However, when a service area of the alternative network slice does not include a camping cell of the terminal device, a request initiated by the terminal device in the camping cell to set up the PDU session associated with the alternative network slice fails. Therefore, there is an urgent need to the success rate of PDU session setup when a camping cell of a terminal device is located outside a service area of a network slice.

### SUMMARY

This application provides a communication method designed to increase the possibility of successful PDU session setup in a scenario where a camping cell of a terminal device is located outside a service area of a network slice.

According to a first aspect, a communication method is provided. The method may be performed by a core network element, or may be performed by a component (for example, a chip, a circuit, or a chip system) of the core network element. This is not limited in this application.

The communication method includes: receiving a first request message from a terminal device, where the first request message is used to request to set up a first protocol data unit PDU session associated with a first network slice, and the first request message includes an identifier of the first network slice and an identifier of a second network slice; determining, based on configuration information and in response to the first request message, that a first cell is located outside a service area of the second network slice, and that there is at least one network slice with an available resource in the first cell, where the configuration information indicates a network slice area of service configured in a registration area of the terminal device, and the first cell is a camping cell of the terminal device; and determining a third network slice from the at least one network slice, where a resource configured for the third network slice in the first cell is used to set up a second PDU session, and the second PDU session is used to provide the terminal device with a service provided by the first PDU session.

Based on the foregoing technical solution, when, in response to the received first request message and based on the configuration information, determining that the first cell is located outside the service area of the second network slice, and that there is the at least one network slice with the available resource in the first cell, the core network element determines the third network slice from the at least one network slice. The resource configured for the third network slice in the first cell is used to set up the second PDU session, and the second PDU session is used to provide the terminal device with the service provided by the first PDU session. When the camping cell of the terminal device is outside the service area of the second network slice, the third network slice with the available resource is determined, and the resource configured for the third network slice in the first cell is used to set up the second PDU session, so that the PDU session associated with the network slice is set up, thereby increasing the possibility of successful PDU session setup and reducing service interruption and latency.

With reference to the first aspect, in some implementations of the first aspect, the method further includes: receiving first indication information, where the first indication information indicates resource usage of a network slice in at least one tracking area; and determining the third network slice from the at least one network slice includes: determining the third network slice from the at least one network slice based on the first indication information.

Based on the foregoing technical solution, after receiving the first indication information, the core network element may determine the third network slice from the at least one network slice based on the first indication information, thereby increasing accuracy of determining the third network slice by the core network element.

With reference to the first aspect, in some implementations of the first aspect, the method further includes: receiving second indication information, where the second indication information indicates to determine the third network slice; and determining the third network slice from the at least one network slice includes: determining the third network slice from the at least one network slice based on the first indication information.

Based on the foregoing technical solution, before determining the third network slice from the at least one network slice, the core network element receives the second indication information, where the second indication information indicates to determine the third network slice, so that the core network element determines the third network slice from the at least one network slice in response to the second indication information.

With reference to the first aspect, in some implementations of the first aspect, the first network slice corresponds to the second network slice, and when the third network slice is determined from the at least one network slice, the method further includes: updating, from the second network slice to the third network slice, a network slice corresponding to the first network slice.

Based on the foregoing technical solution, before receiving the first request message, the core network element determines that the network slice corresponding to the first network slice is the second network slice. When determining the third network slice from the at least one network slice, the core network element may update, from the second network slice to the third network slice, the network slice corresponding to the first network slice, so that the network slice corresponding to the first network slice can be updated.

With reference to the first aspect, in some implementations of the first aspect, the second PDU session is a PDU session associated with the third network slice; and the method further includes: sending a first message, where the first message is used to request to set up the PDU session associated with the third network slice.

Based on the foregoing technical solution, if the second PDU session is the PDU session associated with the third network slice, the core network element may indicate, through the first message, an access network device to set up the PDU session associated with the third network slice, so as to indicate PDU session setup. This increases the possibility of successful PDU session setup.

With reference to the first aspect, in some implementations of the first aspect, the second PDU session is a PDU session associated with the second network slice; and the method further includes: sending a second message, where the second message is used to request to set up the second PDU session, the second message includes third indication information, and the third indication information indicates that the resource configured for the third network slice in the first cell is used to set up the second PDU session.

Based on the foregoing technical solution, if the second PDU session is the PDU session associated with the second network slice, the core network element may indicate, through the second message, the access network device to set up the PDU session associated with the second network slice, and include the third indication information in the second message, to indicate that a resource required for setting up the PDU session associated with the second network slice is the resource configured for the third network slice in the first cell, so as to indicate PDU session setup. This increases the possibility of successful PDU session setup.

With reference to the first aspect, in some implementations of the first aspect, the third network slice meets at least one of the following conditions: a slice service type SST and/or a slice differentiator SD of the third network slice are/is the same as an SST and/or an SD of the second network slice; or the third network slice has available resources in all cells within the registration area of the terminal device; or the third network slice belongs to a first network slice group, and the first network slice group is associated with one or more network slices; or the third network slice is a network slice configured with a largest quantity of resources in the first cell.

Based on the foregoing technical solution, the third network slice determined by the core network element may be a network slice that meets different conditions in the at least one network slice with the available resource in the first cell. Therefore, the core network element may select a proper third network slice based on the different conditions, thereby improving flexibility of the solution.

According to a second aspect, a communication method is provided. The method may be performed by an access network device, or may be performed by a component (for example, a chip, a circuit, or a chip system) of the access network device. This is not limited in this application.

The communication method includes: receiving a second message, where the second message is used to request to set up a protocol data unit PDU session associated with a second network slice, the second message includes third indication information, the third indication information indicates that the resource configured for the third network slice in the first cell is used to set up the second PDU session, and the third network slice is determined by a core network element from at least one network slice with an available resource in the first cell, based on configuration information, when it is determined that the first cell is located outside the service area of the second network slice; and setting up a data radio bearer DRB associated with the third network slice, where the DRB is used to provide a terminal device with data transmission through an air interface, the configuration information indicates a network slice area of service configured in a registration area of the terminal device, and the first cell is a camping cell of the terminal device.

Based on the foregoing technical solution, in response to the received second message, the access network device determines, based on the third indication information in the second message, that the resource configured for the third network slice in the first cell may be used to set up the PDU session associated with the second network slice, so that when the first cell is located outside the service area of the second network slice, and there is the at least one network slice with the available resource in the first cell, the resource of the third network slice with the available resource may be used to set up the PDU session associated with the second network slice, to set up the PDU session associated with the network slice, thereby increasing the possibility of successful PDU session setup.

With reference to the second aspect, in some implementations of the second aspect, the method further includes: controlling a data transmission rate based on any one of a slice maximum bit rate SMBR of a first network slice, an SMBR of the second network slice, or an SMBR of the third network slice, where the first network slice corresponds to the second network slice.

With reference to the second aspect, in some implementations of the second aspect, the method further includes: sending first indication information, where the first indication information indicates resource usage of a network slice in at least one tracking area.

Based on the foregoing technical solution, when a service area for one or more network slices is configured (for example, configured by operation, administration, and maintenance (operation, administration, and maintenance, OAM)) for the access network device, the access network device may provide, through the first indication information, the core network element with the resource usage of the network slice in the at least one tracking area, to assist the core network element in accurately determining the third network slice.

According to a third aspect, a communication method is provided. The method may be performed by a terminal device, or may be performed by a component (for example, a chip, a circuit, or a chip system) of the terminal device. This is not limited in this application.

The communication method includes: receiving fourth indication information and configuration information, where the fourth indication information indicates that a first network slice corresponds to a second network slice, and the configuration information indicates a network slice area of service configured in a registration area of the terminal device; when the terminal device determines to initiate a request for setting up a first protocol data unit PDU session associated with the first network slice in a first cell, determining, based on the fourth indication information and the configuration information, that the first cell is located outside a service area of the second network slice, and that there is at least one network slice with an available resource in the first cell, where the first cell is a camping cell of the terminal device; and sending second indication information, where the second indication information indicates a third network slice in the at least one network slice, or the second indication information indicates to determine the third network slice, a resource configured for the third network slice in the first cell is used to set up a second PDU session, and the second PDU session is used to provide the terminal device with a service provided by the first PDU session.

Based on the foregoing technical solution, when the terminal device determines to initiate, in the first cell, the request for setting up the first PDU session associated with the first network slice, the terminal device may determine, based on the received information (for example, the fourth indication information and the configuration information), that the first cell is located outside the service area of the second network slice corresponding to the first network slice, and that there is the at least one network slice with the available resource in the first cell. Further, the terminal device indicates the third network slice in the at least one network slice through the second indication information, or indicates a network side (for example, an access network device or a core network element) to determine the third network slice. The resource configured for the third network slice in the first cell is used to set up the second PDU session, and the second PDU session is used to provide the terminal device with the service provided by the first PDU session. When the camping cell of the terminal device is outside the service area of the second network slice, the third network slice with the available resource is determined, and the resource configured for the third network slice in the first cell is used to set up the second PDU session, so that the PDU session associated with the network slice is set up, thereby increasing the possibility of successful PDU session setup and reducing service interruption and latency.

With reference to the third aspect, in some implementations of the third aspect, when the second indication information indicates the third network slice in the at least one network slice, the method further includes: determining the third network slice from the at least one network slice.

Based on the foregoing technical solution, if the second indication information directly indicates the third network slice in the at least one network slice, the terminal device determines the third network slice before sending the second indication information to the network side, so that the network side device (for example, the access network device or the core network element) does not need to determine the third network slice, thereby reducing complexity of the network side device.

With reference to the third aspect, in some implementations of the third aspect, the second indication information further indicates to update, from the second network slice to the third network slice, a network slice corresponding to the first network slice.

Based on the foregoing technical solution, the second indication information may further indicate to update, from the second network slice to the third network slice, the network slice corresponding to the first network slice, so that the PDU session associated with the third network slice can be directly set up in a subsequent PDU session setup process, thereby avoiding a failure in setting up the PDU session associated with the second network slice.

With reference to the third aspect, in some implementations of the third aspect, the third network slice meets at least one of the following conditions: a slice service type SST and/or a slice differentiator SD of the third network slice are/is the same as an SST and/or an SD of the second network slice; or the third network slice has available resources in all cells within the registration area of the terminal device; or the third network slice belongs to a first network slice group, and the first network slice group is associated with one or more network slices; or the third network slice is a network slice configured with a largest quantity of resources in the first cell.

Based on the foregoing technical solution, the third network slice determined by the terminal device or the network side device may be a network slice that meets different conditions in the at least one network slice with the available resource in the first cell. Therefore, the terminal device or the network side device may select a proper third network slice based on the different conditions, thereby improving flexibility of the solution.

According to a fourth aspect, a communication method is provided. The method may be performed by an access network device or a core network element, or may be performed by a component (for example, a chip, a circuit, or a chip system) of the access network device or the core network element. This is not limited in this application.

The communication method includes: receiving second indication information, where the second indication information indicates a third network slice, or the second indication information indicates to determine the third network slice, and the third network slice is a network slice with an available resource in a first cell; and in response to the second indication information, determining the third network slice, where a resource configured for the third network slice in the first cell is used to set up a second protocol data unit PDU session, the second PDU session is used to provide a terminal device with a service provided by a first PDU session, the first cell is located outside a service area of a second network slice, the first PDU session is a PDU session that is associated with the first network slice and that the terminal device requests to set up, the first network slice corresponds to the second network slice, and the first cell is a camping cell of the terminal device.

Based on the foregoing technical solution, when receiving the second indication information, a network side device (for example, the access network device or the core network element) may determine the third network slice in response to the second indication information. For example, when the second indication information indicates the third network slice, the network side device directly learns of the third network slice based on the second indication information. For another example, when the second indication information indicates the network side device to determine the third network slice, the network side device responds to triggering of the second indication information, and select a proper network slice as the third network slice. The resource configured for the third network slice in the first cell is used to set up the second PDU session, and the second PDU session is used to provide the terminal device with a service provided by the first PDU session. When the camping cell of the terminal device is outside the service area of the second network slice, the third network slice with the available resource is determined, and the resource configured for the third network slice in the first cell is used to set up the second PDU session, so that the PDU session associated with the network slice is set up, thereby increasing the possibility of successful PDU session setup.

With reference to the fourth aspect, in some implementations of the fourth aspect, when the second indication information indicates to determine the third network slice, the method further includes: determining, based on configuration information, that the first cell is located outside the service area of the second network slice, and that there is at least one network slice with an available resource in the first cell, where the configuration information indicates a network slice area of service configured in a registration area of the terminal device; and determining the third network slice from the at least one network slice.

Based on the foregoing technical solution, when the second indication information indicates to determine the third network slice, when, based on the configuration information, determining that the first cell is located outside the service area of the second network slice, and that there is the at least one network slice with the available resource in the first cell, the network side device may determine the third network slice from the at least one network slice.

With reference to the fourth aspect, in some implementations of the fourth aspect, the method further includes: updating, from the second network slice to the third network slice, a network slice corresponding to the first network slice.

Based on the foregoing technical solution, the network side device may be the core network element. If the second indication information indicates the core network element to determine the third network slice, when determining the third network slice, the core network element may update, from the second network slice to the third network slice, the network slice corresponding to the first network slice, so that the PDU session associated with the third network slice can be directly set up in a subsequent PDU session setup process, thereby avoiding a failure in setting up the PDU session associated with the second network slice.

With reference to the fourth aspect, in some implementations of the fourth aspect, the second PDU session is the PDU session associated with the second network slice; and the method further includes: sending a second message, where the second message is used to request to set up the second PDU session, the second message includes third indication information, and the third indication information indicates that the resource configured for the third network slice in the first cell is used to set up the second PDU session.

Based on the foregoing technical solution, the network side device may be the core network element. If the second PDU session is the PDU session associated with the second network slice, the core network element may indicate, through the second message, the access network device to set up the PDU session associated with the second network slice, and include the third indication information in the second message, to indicate that a resource required for setting up the PDU session associated with the second network slice is the resource configured for the third network slice in the first cell, so as to indicate PDU session setup. This increases a possibility of setting up the PDU session.

With reference to the fourth aspect, in some implementations of the fourth aspect, the second indication information further indicates to update, from the second network slice to the third network slice, the network slice corresponding to the first network slice, and the second PDU session is a PDU session associated with the third network slice. The method further includes: sending a first message, where the first message is used to request to set up the PDU session associated with the third network slice.

Based on the foregoing technical solution, the network side device may be the core network element. If the second PDU session is the PDU session associated with the third network slice, the core network element may indicate, through the first message, the access network device to set up the PDU session associated with the third network slice, so as to indicate PDU session setup. This increases the possibility of successful PDU session setup.

With reference to the fourth aspect, in some implementations of the fourth aspect, the method further includes: setting up a data radio bearer DRB associated with the third network slice, where the DRB is used to provide the terminal device with data transmission through an air interface.

Based on the foregoing technical solution, the network side device may be the access network device. After determining the third network slice, the access network device may set up the DRB associated with the third network slice, to provide the terminal device with the data transmission through the air interface.

According to a fifth aspect, a communication method is provided. The method may be performed by a terminal device, or may be performed by a component (for example, a chip, a circuit, or a chip system) of the terminal device. This is not limited in this application.

The communication method includes: receiving fourth indication information and configuration information, where the fourth indication information indicates that a first network slice corresponds to a second network slice, and the configuration information indicates a network slice area of service configured in a registration area of the terminal device; and when determining, based on the fourth indication information and the configuration information, that the first cell is located outside a service area of the second network slice, the terminal device skipping initiating, in the first cell, a request for setting up a first protocol data unit PDU session associated with the first network slice.

Based on the foregoing technical solution, the terminal device may determine, based on the received information (for example, the fourth indication information and the configuration information), that the first cell is located outside the service area of the second network slice corresponding to the first network slice. In this case, the terminal device may determine not to initiate, in the first cell, the request for setting up the first PDU session associated with the first network slice, to avoid a subsequent failure in setting up the PDU session and avoid unnecessary resource overheads.

According to a sixth aspect, a communication method is provided. The method may be performed by an access network device, or may be performed by a component (for example, a chip, a circuit, or a chip system) of the access network device. This is not limited in this application.

The communication method includes: receiving a second request message, where the second request message is used to request to set up, in a first cell, a protocol data unit PDU session associated with a second network slice; determining, based on configuration information, that the first cell is located outside a service area of the second network slice, and that there is at least one network slice with an available resource in the first cell, where the configuration information indicates a network slice area of service configured in a registration area of the terminal device; and setting up a data radio bearer DRB associated with a third network slice in the at least one network slice, where the DRB is used to provide the terminal device with data transmission through an air interface, the first cell is a camping cell of the terminal device, the first cell is located outside the service area of the second network slice, and a resource configured for the third network slice in the first cell is used to set up a PDU session associated with the second network slice.

Based on the foregoing technical solution, in response to the received second request message and based on the configuration information, the access network device determines that the first cell is located outside the service area of the second network slice corresponding to a first network slice, and that there is the at least one network slice with the available resource in the first cell. In this way, in a process of setting up the DRB, the access network device may set up the DRB associated with the third network slice instead of the DRB associated with the second network slice, and set up, using a resource of the third network slice with an available resource, the PDU session associated with the network slice, so that the PDU session associated with the network slice is set up, thereby increasing the possibility of successful PDU session setup and reducing service interruption and latency.

With reference to the sixth aspect, in some implementations of the sixth aspect, the method further includes: determining the third network slice from the at least one network slice.

Based on the foregoing technical solution, the access network device may determine and obtain the third network slice, so that the core network element does not need to determine the third network slice, thereby reducing complexity of a core network element.

With reference to the sixth aspect, in some implementations of the sixth aspect, the method further includes: sending fifth indication information, where the fifth indication information indicates the third network slice, or the fifth indication information indicates to determine the third network slice.

Based on the foregoing technical solution, the access network device may indicate, through the fifth indication information, the core network element to determine the third network slice, and then the core network element indicates that the resource configured for the third network slice in the first cell is used to set up the second PDU session, so that the access network device does not need to determine the third network slice, thereby reducing complexity of the access network device. Alternatively, the access network device may determine the third network slice, so that the core network element does not need to determine the third network slice, thereby reducing complexity of the core network element.

With reference to the sixth aspect, in some implementations of the sixth aspect, the fifth indication information further indicates to update, from the second network slice to the third network slice, a network slice corresponding to the first network slice.

Based on the foregoing technical solution, the fifth indication information may indicate to update, from the second network slice to the third network slice, the network slice corresponding to the first network slice. Alternatively, after determining the third network slice, the core network element updates, from the second network slice to the third network slice, the network slice corresponding to the first network slice, and additional indication by the fifth indication information is not needed. In this way, the PDU session associated with the third network slice can be directly set up in a subsequent PDU session setup process, to avoid a failure in setting up the PDU session associated with the second network slice.

With reference to the sixth aspect, in some implementations of the sixth aspect, the method further includes: controlling a data transmission rate based on any one of a slice maximum bit rate SMBR of a first network slice, an SMBR of the second network slice, or an SMBR of the third network slice, where the first network slice corresponds to the second network slice.

With reference to the sixth aspect, in some implementations of the sixth aspect, the method further includes: sending first indication information, where the first indication information indicates resource usage of a network slice in at least one tracking area.

Based on the foregoing technical solution, when a service area for one or more network slices is configured (for example, configured by OAM) for the access network device, the access network device may provide, through the first indication information, the core network element with the resource usage of the network slice in the at least one tracking area, to assist the core network element in accurately determining the third network slice.

With reference to the sixth aspect, in some implementations of the sixth aspect, the third network slice meets at least one of the following conditions: a slice service type SST and/or a slice differentiator SD of the third network slice are/is the same as an SST and/or an SD of the second network slice; or the third network slice has available resources in all cells within the registration area of the terminal device; or the third network slice belongs to a first network slice group, and the first network slice group is associated with one or more network slices; or the third network slice is a network slice configured with a largest quantity of resources in the first cell.

Based on the foregoing technical solution, the third network slice determined by the network side device may be a network slice that meets different conditions in the at least one network slice with the available resource in the first cell. Therefore, the network side device may select a proper third network slice based on the different conditions, thereby improving flexibility of the solution.

According to a seventh aspect, a communication apparatus is provided. The communication apparatus may be a first apparatus, or may be a module or unit (for example, a chip, a chip system, or a circuit) that is in the first apparatus and that is in a one-to-one correspondence with the method/operation/step/action described in any one of the first aspect to the sixth aspect and the implementations of the first aspect to the sixth aspect, or can be used together with the first apparatus.

For example, the first apparatus may be the core network element in the first aspect or a component (for example, a chip, a circuit, or a chip system) of the core network element. The first apparatus includes a transceiver module or unit configured to perform the receiving and sending operations/steps/actions described in any one of the first aspect and the implementations of the first aspect, and includes a processing module or unit configured to perform the processing operations/steps/actions described in any one of the first aspect and the implementations of the first aspect.

For example, the first apparatus may be the access network device in the second aspect or the sixth aspect or a component (for example, a chip, a circuit, or a chip system) of the access network device. The first apparatus includes a transceiver module or unit configured to perform the receiving and sending operations/steps/actions described in any one of the second aspect or the sixth aspect and the implementations of the second aspect or the sixth aspect, and includes a processing module or unit configured to perform the processing operations/steps/actions described in any one of the second aspect or the sixth aspect and the implementations of the second aspect or the sixth aspect. For example, the first apparatus may be the terminal device in the third aspect or the fifth aspect or a component (for example, a chip, a circuit, or a chip system) of the terminal device. The first apparatus includes a transceiver module or unit configured to perform the receiving and sending operations/steps/actions described in any one of the third aspect or the fifth aspect and the implementations of the third aspect or the fifth aspect, and includes a processing module or unit configured to perform the processing operations/steps/actions described in any one of the third aspect or the fifth aspect and the implementations of the third aspect or the fifth aspect.

For example, the first apparatus may be the access network device or the core network element in the fourth aspect, or a component (for example, a chip, a circuit, or a chip system) of the access network device or the core network element. The first apparatus includes a transceiver module or unit configured to perform the receiving and sending operations/steps/actions described in any one of the fourth aspect and the implementations of the fourth aspect, and includes a processing module or unit configured to perform the processing operations/steps/actions described in any one of the fourth aspect and the implementations of the fourth aspect.

According to an eighth aspect, a communication apparatus is provided. The communication apparatus is configured to perform the method according to any one of the first aspect to the sixth aspect and the implementations of the first aspect to the sixth aspect. Specifically, the communication apparatus may include units and/or modules (for example, a processing unit and a transceiver unit) configured to perform the method according to any one of the first aspect to the sixth aspect and the implementations of the first aspect to the sixth aspect.

In an implementation, the communication apparatus is a device. The transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the device. In this case, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to a ninth aspect, this application provides a processor, configured to perform the methods provided in the first aspect to the sixth aspect.

Operations such as sending and obtaining/receiving related to the processor may be understood as operations such as output and receiving or input of the processor, or operations such as receiving and sending performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable storage medium stores a computer program. When the computer program is run on a communication apparatus, the communication apparatus is enabled to perform the method according to any one of the implementations of the first aspect to the sixth aspect.

According to an eleventh aspect, a computer program product including instructions is provided. When the computer program product runs on a computer, the computer is enabled to perform the method according to any one of the implementations of the first aspect to the sixth aspect.

According to a twelfth aspect, a chip is provided. The chip includes a processor and a communication interface. The processor reads instructions through the communication interface, to perform the method according to any one of the implementations of the first aspect to the sixth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect to the sixth aspect.

According to a thirteenth aspect, a communication system is provided, including a core network element that performs the method according to any one of the implementations of the first aspect and an access network device that performs the method according to any one of the implementations of the second aspect.

According to a fourteenth aspect, a communication system is provided, including a terminal device that performs the method according to any one of the implementations of the third aspect and a network side device that performs the method according to any one of the implementations of the fourth aspect.

### BRIEF DESCRIPTION OF DRAWINGS

FIG. 1 is a diagram of a communication system 100 to which an embodiment of this application is applicable;
FIG. 2 is a diagram of a service area of a network slice according to this application;
FIG. 3 is a diagram of a scenario in which PDU session setup fails according to this application;
FIG. 4 is a schematic flowchart of a communication method according to this application;
FIG. 5 is a schematic flowchart of another communication method according to this application;
FIG. 6 is a schematic flowchart of still another communication method according to this application;
FIG. 7 is a block diagram of a communication apparatus 10 according to an embodiment of this application;
FIG. 8 is a diagram of another communication apparatus 20 according to an embodiment of this application; and
FIG. 9 is a diagram of a chip system 30 according to an embodiment of this application.

### DESCRIPTION OF EMBODIMENTS

For ease of understanding of embodiments of this application, the following several points are described.

First, in this application, "indicate" may include "directly indicate" and "indirectly indicate". When a piece of indication information indicates A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, words such as "410" and "420" are merely identifiers for ease of description, and do not limit a sequence of performing steps.

Third, in this application, a word "example" or "for example" represents giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "save" in embodiments of this application may mean that saved in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, a "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference between the three is not emphasized, meanings to be expressed are consistent.

Seventh, in embodiments of this application, terms and English abbreviations, such as radio resource control (radio resource control, RRC), are all examples provided for ease of description, and should not constitute any limitation on this application. This application does not exclude a possibility of defining, in an existing or future protocol, another term that can implement a same or similar function.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions of this application with reference to accompanying drawings.

The technical solutions in embodiments of this application are applied to various communication systems, for example, a 5th generation (5th generation, 5G) system or new radio (new radio, NR), a long term evolution (long term evolution, LTE) system, an LTE frequency division duplex (frequency division duplex, FDD) system, and LTE time division duplex (time division duplex, TDD). The technical solutions provided in this application may be further applied to a future communication system, for example, a sixth generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

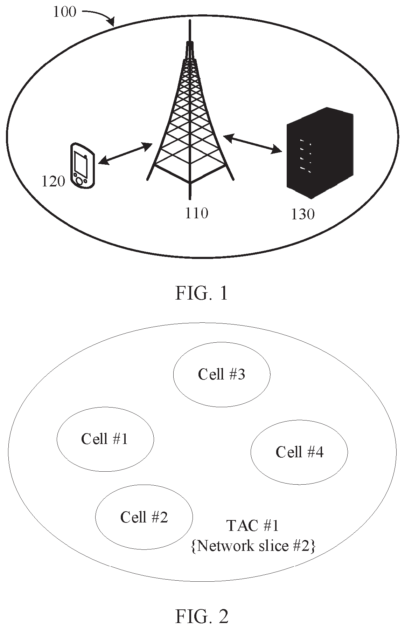

For ease of understanding embodiments of this application, a communication system shown in FIG. 1 is first used as an example to describe in detail a communication system to which embodiments of this application are applicable. FIG. 1 is a diagram of a communication system 100 to which an embodiment of this application is applicable. As shown in FIG. 1, the communication system 100 may include at least one access network device, for example, an access network device 110 shown in FIG. 1. The communication system 100 may further include at least one terminal device, for example, a terminal device 120 shown in FIG. 1. The communication system 100 may further include at least one core network (core network, CN) device, for example, a core network device 130 shown in FIG. 1. The access network device 110 may communicate with the terminal device 120 through a radio link, and the access network device 110 may communicate with the core network device 130 through a radio link. A plurality of antennas may be configured for each communication device like the access network device 110, the terminal device 120, and the core network device 130. For each communication device in the communication system 100, the plurality of configured antennas may include at least one transmit antenna configured to send a signal and at least one receive antenna configured to receive a signal. Therefore, the communication devices in the communication system 100, for example, the access network device 110 and the terminal device 120, may communicate with each other by using a multi-antenna technology.

As an example rather than a limitation, the access network device and the terminal device in the scenario shown in FIG. 1 may communicate with each other in a plurality of manners. For example, the access network device and the terminal device communicate with each other in a point-to-point transmission mode or the access network device and the terminal device communicate with each other in a multi-hop (namely, relay (relay)) transmission mode. A plurality of access network devices communicate with a plurality of terminal devices in a dual-connectivity (dual-connectivity, DC) or multi-connectivity transmission mode. A communication mode between the access network device and the terminal device is not limited in embodiments of this application. For example, transmission between the access network device and the terminal device may be on an uplink, a downlink, an access link, a backhaul (backhaul) link, or a sidelink (Sidelink).

A terminal device (terminal device) in embodiments of this application may be an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

As an example rather than a limitation, in embodiments of this application, the wearable device may also be referred to as a wearable intelligent device, and is a general name of a wearable device developed by intelligently designing daily wear by using a wearable technology, for example, glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may be a terminal device in an IoT system. A main technical feature of the terminal device is that an object is connected to a network by using a communication technology, so as to implement an intelligent network for man-machine interconnection and thing-to-thing interconnection. In embodiments of this application, the IoT technology can implement massive connections, deep coverage, and terminal power saving by using, for example, a narrowband (narrowband, NB) technology.

In embodiments of this application, an access network device may be any device that has a wireless transceiver function and that is configured to communicate with a terminal device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and a reception point (transmission and reception point, TRP), or the like, or may be a gNB in a 5G system, for example, NR, a transmission point (TRP or TP), or an antenna panel or a group of antenna panels (including a plurality of antenna panels) of a base station in a 5G system, or may be a network node that constitutes a gNB or transmission point, for example, a baseband unit (BBU) or a distributed unit (DU), or may be a device that communicates with a terminal device and that is in a future communication system, for example, a gNB in a future communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, or an AAU node. In addition, the CU may be classified into a network device in an access network (radio access network, RAN), or the CU may be classified into a network device in a core network (core network, CN). This is not limited in this application.

In different systems, the CU (or the CU-CP and the CU-UP), the DU, or the RU may have different names, but a person skilled in the art may understand their meanings. For example, a radio access network may also be an ORAN architecture. In the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

The core network device in embodiments of this application may include but is not limited to the following NFs: a user plane function (user plane function, UPF), a network exposure function (network exposure function, NEF), a network function repository function (network function repository function, NRF), a policy control function (policy control function, PCF), a unified data management (unified data management, UDM) function, a unified data repository (unified data repository, UDR) function, a network data analytics function (network data analytics function, NWDAF), an authentication server function (authentication server function, AUSF), an access and mobility management function (access and mobility management function, AMF), a session management function (session management function, SMF), a network slice selection function (network slice selection function, NSSF), and the like. The AMF, SMF, UPF, NEF, AUSF, NRF, PCF, NSSF and the UDM may be understood as network elements configured to implement different functions in a core network, for example, may be combined into a network slice based on a requirement. These core network elements may be independent devices, or may be integrated into a same device to implement different functions. Specific forms of the foregoing network elements are not limited in this application.

It should be understood that, the foregoing names are defined only for ease of distinguishing between different functions, and should not constitute any limitation on this application. This application does not exclude a possibility that other names are used in the 5G network and another future network. For example, in the future communication network, a part or all of the foregoing network elements may still use terms in 5G, or may use other names.

As an example rather than a limitation, in embodiments of this application, the CN device is configured to provide a user connection, manage a user, and complete a service bearer, and serves as a bearer network to provide an interface to an external network. This application mainly relates to an AMF network element (or referred to as an AMF, an AMF device, an AMF unit, or the like) in a core network. The AMF is a control plane network function provided by an operator network, and is responsible for access control and mobility management for accessing the operator network by a terminal device, for example, including functions such as mobility status management, temporary user identifier allocation, and user authentication and authorization.

In embodiments of this application, the terminal device, the access network device, or the core network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD)), a digital versatile disc (digital versatile disc, DVD), and a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that, in FIG. 1, communication between the access network device and the terminal device and communication between the access network device and the core network device are used as an example to briefly describe a communication scenario to which this application can be applied, and no limitation is imposed on another scenario to which this application can be applied. It should be further understood that FIG. 1 is merely a simplified diagram of an example for ease of understanding. The communication system may further include another network device or may further include another terminal device, which is not shown in FIG. 1.

For ease of understanding embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.
**1. Network slice (network slice)**: With development of mobile communication technologies, various new services and application scenarios continuously emerge, and requirements of these services on network functions, connection performance, security, and the like are greatly different. If a single network is used to carry these services, it is difficult to meet requirements such as high bandwidth, a low latency, and high reliability. In addition, building a new network for each type of service brings huge costs. This requires 5G to be flexible, scalable, and able to meet different service requirements. 5G provides users with customized network services through end-to-end network slices (also referred to as "slices"). With flexible allocation of network resources and on-demand networking, 5G virtualizes a plurality of isolated logical subnets with different characteristics on a same physical infrastructure to provide the users with targeted services.

Different logical subnets are identified and differentiated based on single network slice selection assistance information (single network slice selection assistance information, S-NSSAI).

For example, each piece of S-NSSAI may include the following content.
(1) A slice service type (slice service type, SST) indicates a feature and a service type that are specific to a slice.
(2) A slice differentiator (slice differentiator, SD), as a supplement to the SST, can further differentiate a plurality of network slice instances of a same SST. The SD is optional content of the S-NSSAI.

It should be understood that the NSSAI below means one or more pieces of S-NSSAI (namely, an S-NSSAI list).

The NSSAI is classified into the following types.
(1) Subscribed NSSAI (subscribed NSSAI) belongs to subscription data of a subscriber.
(2) Default NSSAI (default NSSAI): According to a policy of an operator, one or more pieces of subscribed NSSAI of the subscriber may be set as the default NSSAI. If UE does not include allowed NSSAI (allowed NSSAI) in a registration request (registration request) message and the default NSSAI exists, a network can use the default NSSAI to provide the UE with services.
(3) Requested NSSAI (requested NSSAI) indicates allowed NSSAI that the UE includes in the registration request message or configured NSSAI (configured NSSAI).
(4) Allowed NSSAI indicates which S-NSSAI in NSSAI requested by the UE is allowed by the network. The network can indicate the allowed NSSAI to the UE through an "allowed NSSAI" information element (information element, IE) in a registration accept (registration accept) message.
(5) Configured NSSAI indicates NSSAI configured by the network for the UE to use. After receiving a configuration parameter indicating the configured NSSAI, the UE learns, based on the configuration parameter, which S-NSSAI is available in the network. The network may indicate the configured NSSAI to the UE through a "configured NSSAI" IE in the registration accept message.

Specifically, a slice list (slice list) supported by an access network device is preconfigured by operation, administration, and maintenance (operation, administration, and maintenance, OAM) at a tracking area (tracking area, TA) granularity, that is, all cells in a specific TA support same slices. For example, one TA includes one or more cells. The access network device may report the slice list to a core network when setting up a communication interface (for example, an NG interface) with the core network. If the access network device may further support CU/DU separation, a DU sends a slice list supported by each TA to a CU, and then the CU reports the slice list to the core network.

**2. Management of a PDU session associated with a slice**: When UE that has subscribed to a slice service initially accesses a network, the UE may initiate a registration request for a specific network slice by including requested NSSAI in an RRC setup complete (RRCSetupComplete) message. The registration request is transparently transmitted by the access network device (that is, the access network device does not parse the registration request) to a core network side. Then, the core network determines, based on subscription information (such as subscribed NSSAI) of the UE in UDM, whether a network side (including a RAN side and the core network side) can provide the slice service with a service.

If determining that the current network supports a service corresponding to requested NSSAI, the core network returns, to the UE through the registration accept message, the allowed NSSAI and a registration area (registration area, RA) range (indicated by a tracking area identity (tracking area identity, TAI) list) of the UE.

If determining that the current network does not support a part or all of S-NSSAI in the requested NSSAI, the core network returns, to the UE through the registration accept message, the allowed NSSAI and/or rejected NSSAI (namely, S-NSSAI that cannot be supported by the current network in the requested NSSAI) and the RA range of the UE. When moving within the RA range, the UE cannot re-initiate a registration request for the rejected NSSAI.

The UE may initiate a PDU session setup request (where the PDU session setup request may be carried in a NAS message transparently transmitted by the access network device) to the core network based on the allowed NSSAI. After determining that the PDU session can be supported, the core network sends a PDU session resource setup request to the access network device, where one PDU session is associated with one piece of S-NSSAI. After determining that a resource may be configured for the current PDU session, the access network device sets up at least one corresponding data radio bearer (data radio bearer, DRB) through an air interface.

**3. Network slice as group (network slice as group, NSAG)**: The access network device may notify the UE of a cell reselection priority and a specific random access parameter for a slice in a broadcast manner. The foregoing information is separately included in a system information block (system information block 16, SIB16) and a SIB1. Because broadcast at a slice granularity may cause large overheads to a SIB, a concept of a network slice group (slice group) (or referred to as an NSAG) is proposed, that is, one or more network slices are grouped for identification. Specifically, a specific NSAG ID may be obtained by mapping one or more pieces of S-NSSAI, and a mapping relationship between an NSAG ID and S-NSSAI in a specific area is unique.

For example, features of the mapping relationship between the NSAG ID and the S-NSSAI in the specific area are as follows.
(1) Bidirectional mapping includes a value of the NSAG ID and a mapping value of the associated S-NSSAI.
(2) The mapping relationship is configured by OAM to a gNB, the gNB sends the mapping relationship to a CN through an NG interface, and the CN provides the UE with the mapping relationship through a NAS message.
(3) Area validity is at a TA granularity. When sending the mapping relationship between the NSAG ID and the S-NSSAI to the UE through the NAS message, the CN may also carry an effective TAI corresponding to the mapping relationship.
(4) It is allowed that the network slice is not associated with any NSAG.
(5) One network slice may be associated with NSAGs for different use purposes. That is, there may be independent mapping relationships between NSAGs and network slices for the different use purposes. For example, a network slice #1 may be associated with an NSAG #1 used for cell reselection, and may also be associated with an NSAG #2 used for random access. However, for a same use purpose, one network slice is not allowed to be associated with a plurality of NSAGs. For example, the network slice #1 is associated with the NSAG #1 during cell reselection; and similarly, the network slice #1 is associated with the NSAG #2 during random access.
(6) A corresponding NSAG priority (priority) may be configured for each NSAG.

**4. Slice maximum bit rate (slice maximum bit rate, SMBR)**: The subscription information of the UE may include a UE-slice-MBR. When the gNB receives a UE-slice-MBR associated with the allowed NSSAI from an AMF, the gNB may perform, based on the value, aggregate rate limiting for one or more activated user-plane PDU sessions associated with a same slice of same UE. Specifically, the gNB should ensure that an aggregate bit rate of all guaranteed bit rate (guaranteed bit rate, GBR) quality of service flows and non-GBR quality of service (quality of service, QoS) flows that belong to these PDU sessions does not exceed the UE-slice-MBR, and always ensure a guaranteed flow bit rate (guaranteed flow bit rate, GFBR) of each GBR QoS flow of these PDU sessions.

**5. Alternative S-NSSAI (alternative S-NSSAI)**: The alternative S-NSSAI is used to replace allowed S-NSSAI that has no resource or experiences resource congestion on the CN side, to provide the UE with a service. The following features are included.
(1) The alternative S-NSSAI can be supported in the RA of the UE.
(2) When the UE indicates that an alternative S-NSSAI capability is supported, if a piece of allowed S-NSSAI (namely, original S-NSSAI) is unavailable or encounters congestion on the CN, the AMF may send a correspondence between the alternative S-NSSAI and the original S-NSSAI to the UE.
(3) The correspondence may alternatively be sent to the UE in advance, that is, it is not necessarily required to rely on setting up a PDU session of for original S-NSSAI to trigger delivery of the correspondence.
(4) After receiving the correspondence, if the UE needs to initiate PDU session setup based on an original network slice, the UE needs to include both the original S-NSSAI and the alternative S-NSSAI in a PDU session setup request. After receiving the PDU session setup request, the AMF sends the two pieces of S-NSSAI to an SMF, and the SMF determines to set up a PDU session associated with the alternative S-NSSAI, that is, a network slice replacement (network slice replacement) procedure is completed.
(5) After network slice replacement is complete, if the alternative S-NSSAI is not the configured NSSAI of the UE, the AMF adds the alternative S-NSSAI to the configured NSSAI and updates, to the UE, NSAG information (including an NSAG priority) associated with the alternative S-NSSAI.

**6. Network slice service area of service (network slice area of service, NS-AoS)**: Configuration of the UE and the network may be affected when a slice is deployed and withdrawn within a specific time interval. For example, when a slice is no longer available or becomes available, the allowed NSSAI and another parameter may be affected, and the RA may also need to be changed. FIG. 2 is used as an example. A TA identified by TAC #1 supports a network slice #2, and there are four cells in the TA in total. Due to deployment or the like, a resource configured in a cell #2 for the network slice #2 is suddenly limited. In other words, it may be understood that no resource is configured for the network slice #2 in the cell #2. Therefore, the cell #2 cannot actually provide the UE with a service of the network slice #2. To avoid impact on the UE and the network side, the NS-AoS is introduced to indicate a service area (an area including one or more cells) for a specific slice. The following features are included.
(1) The NS-AoS is deployed on the RAN side, and the AMF can obtain, through OAM, an NS-AoS configured for each slice in the RA of the UE.
(2) When the UE indicates that an NS-AoS capability is supported, the AMF sends the NS-AoS of the configured NSSAI to the UE through the registration accept message or a UE configuration update message.
(3) After the UE receives the NS-AoS of the configured NSSAI, if the UE initiates, in an area outside an NS-AoS of a specific slice in the RA, a request for setting up a PDU session associated with the slice, the UE cannot activate a data plane of the UE after the PDU session is set up. In other words, the PDU session is retained on the CN side, but no user data is exchanged between the UE and the CN.

With reference to FIG. 1, the foregoing briefly describes a scenario to which the communication method provided in embodiments of this application can be applied, describes basic concepts that may be used in embodiments of this application, and describes the alternative S-NSSAI and the NS-AoS in the basic concepts. It should be understood that after the AMF sends the correspondence between the original S-NSSAI and the alternative S-NSSAI to the UE camping on the NS-AoS of the original S-NSSAI, when the UE moves to a cell other than the NS-AoS of the alternative S-NSSAI, initiates a PDU session associated with the original network slice, and triggers network slice replacement (because no resource is configured for the original S-NSSAI on the CN side), no resource is configured for the alternative S-NSSAI on the RAN side when the PDU session associated with the alternative S-NSSAI needs to be set up. Therefore, the PDU session associated with the alternative S-NSSAI cannot be set up.

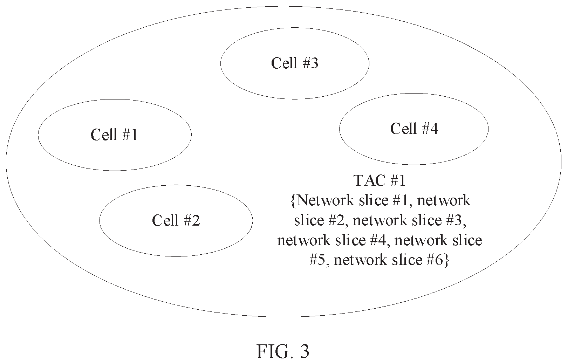

For ease of understanding, the following describes the alternative S-NSSAI and the NS-AoS with reference to a possible problem and FIG. 3.

As shown in FIG. 3, it is assumed that the TA identified by the TAC #1 is the RA of the UE, a list of network slices supported in the TA is {network slice #1, network slice #2, network slice #3, network slice #4, network slice #5, network slice #6} ("{}" represents a list), and an NS-AoS configured for the network slice #2 is {cell #1, cell #3, cell #4}. The UE initially communicates with the network in the cell #1. Because the network slice #1 encounters congestion or is unavailable on the CN side, the AMF sends a correspondence between the network slice #1 and the network slice #2 to the UE. In other words, the original S-NSSAI is the network slice #1, and the alternative S-NSSAI is the network slice #2. Then, after moving to the cell #2, the UE initiates a request for setting up a PDU session associated with the network slice #1. In this case, an uplink NAS message carries both identifiers of the network slice #1 and the network slice #2. After receiving the identifiers, the AMF sends the two slice identifiers and the PDU session setup request to the SMF. The SMF indicates to set up a PDU session associated with the network slice #2. However, because no resource is configured in the cell #2 for the network slice #2, the PDU session associated with the network slice #2 fails to be set up.

This application provides a communication method, designed to increase the possibility of successful PDU session setup in a scenario where a camping cell of a terminal device is located outside a service area of a network slice. For example, according to the communication method provided in this application, in a scenario in which UE moves to a cell other than an NS-AoS of alternative S-NSSAI to initiate a PDU session of an original network slice and trigger network slice replacement, it is ensured that the PDU session requested by the UE is successfully set up.

It should be understood that the communication method provided in embodiments of this application may be applied to a 5G system, for example, the communication system shown in FIG. 1.

It should further be understood that a specific structure of an execution body of the method provided in embodiments of this application is not specifically limited in embodiments shown below, provided that a program that records code for the method provided in embodiments of this application can be run to perform communication according to the method provided in embodiments of this application. For example, the execution body of the method provided in embodiments of this application may be a device or a network element, or a functional module that can invoke and execute a program in the device or the network element.

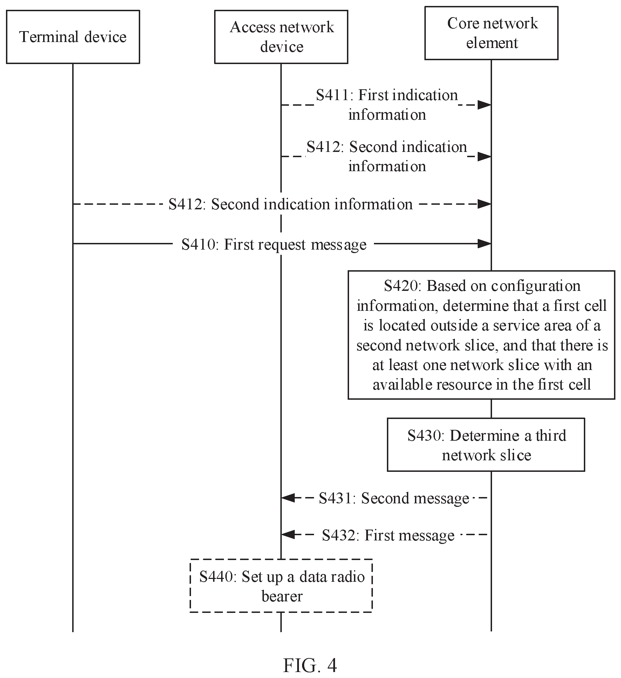

FIG. 4 is a schematic flowchart of a communication method according to this application. The following steps are included.

S410: A terminal device sends a first request message to a core network element; and correspondingly, the core network element receives the first request message from the terminal device.

The core network element in this embodiment may be the AMF described above. A name of the core network element is not limited in this embodiment. All network elements that can implement functions of the core network element in this embodiment fall within the protection scope of this application. For ease of description, the following uses an example in which the core network element is an AMF for description.

It should be noted that, when the terminal device sends the first request message to the core network element, a camping cell of the terminal device is a first cell, or a serving cell of the terminal device is a first cell. For example, after moving to the first cell, the terminal device located in a second cell sends the first request message to the core network element.

Specifically, the first request message is used to request to set up a first PDU session associated with a first network slice. For example, the first request message may be an uplink NAS message including a PDU session setup request message.

The first request message includes an identifier of the first network slice and an identifier of a second network slice. The first network slice corresponds to the second network slice. The first network slice belongs to allowed NSSAI of the terminal device. The second network slice may be understood as a network slice that replaces the first network slice to provide the terminal device with a service when the first network slice encounters congestion or is unavailable. A service area of the second network slice does not include the first cell.

If a network slice is indicated by S-NSSAI in this embodiment, that the first request message includes the identifier of the first network slice and the identifier of the second network slice may be understood as that the first request message includes original S-NSSAI and alternative S-NSSAI.

For ease of understanding, a scenario in which the terminal device sends the first request message to the AMF in this embodiment is described with reference to a specific example.

For example, an RA of the terminal device is a TA identified by TAC #1. It is assumed that, as shown in FIG. 3, a list of network slices supported in the TA is {network slice #1, network slice #2, network slice #3, network slice #4, network slice #5, network slice #6}. An NS-AoS configured for the network slice #2 is {cell #1, cell #3, cell #4}. In other words, no resource is configured in a cell #2 for the network slice #2. The terminal device initially communicates with a network in the second cell (for example, the cell #1). Because the first network slice (for example, the network slice #1) encounters congestion or is unavailable on a network side, the AMF may send a correspondence between the first network slice (for example, the network slice #1) and the second network slice (for example, the network slice #2) to the terminal device. In other words, the original S-NSSAI is the network slice #1, and the alternative S-NSSAI is the network slice #2. Then, after moving to the first cell (for example, the cell #2), the terminal device initiates a request for setting up a PDU session associated with the network slice #1 (namely, the first request message), and includes both an identifier of the network slice #1 and an identifier of the network slice #2 (that is, includes an identifier of the first network slice and the identifier of the second network slice) in the first request message.

Further, in this embodiment, after the AMF receives the first request message (or the AMF responds to the received first request message), the AMF may determine, based on obtained configuration information, that the first cell is located outside the service area of the second network slice, and that there is at least one network slice with an available resource in the first cell. The method procedure shown in FIG. 4 further includes the following step.

S420: Based on the configuration information, the AMF determines that the first cell is located outside the service area of the second network slice, and that there is the at least one network slice with the available resource in the first cell.

In this embodiment, in response to the received first request message and based on the configuration information, the AMF determines that the first cell is located outside the service area of the second network slice, and that there is the at least one network slice with the available resource in the first cell. The configuration information indicates a network slice area of service configured in a registration area of the terminal device.

It may be understood that, that the configuration information indicates the network slice area of service configured in the registration area of the terminal device is that the configuration information indicates a service area of configured NSSAI in the registration area of the terminal device. The service area of the network slice may be understood as a service area corresponding to the network slice.

In addition, the network slice may be indicated by S-NSSAI, and the service area of the second network slice may be represented as an NS-AoS of the alternative S-NSSAI.

For example, the AMF may obtain the configuration information from OAM, or the AMF may learn of the configuration information based on historical communication data, or the AMF may obtain the configuration information from an access network device side. In this embodiment, no limitation is imposed on how the AMF obtains the configuration information.

For ease of understanding, how, based on the configuration information, the AMF determines that the first cell is located outside the service area of the second network slice, and that there is the at least one network slice with the available resource in the first cell is described with reference to a specific example.

For example, the RA of the terminal device is the TA identified by the TAC #1. It is assumed that, as shown in FIG. 3, the list of the network slices supported in the TA is {network slice #1, network slice #2, network slice #3, network slice #4, network slice #5, and network slice #6}, and the configuration information indicates that an NS-AoS configured for the network slice #1 is {cell #1, cell #3}, the NS-AoS configured for the network slice #2 is {cell #1, cell #3, cell #4}, an NS-AoS configured for the network slice #3 is {cell #1, cell #2, cell #3}, no NS-AoS is configured for the network slice #4, and an NS-AoS configured for the network slice #5 and the network slice #6 is {cell #1, cell #2, cell #4}. The network slice #1 is understood as the first network slice in this embodiment, the network slice #2 is understood as the second network slice in this embodiment, and the cell #2 is understood as the first cell in this embodiment. Therefore, the AMF determines, based on the configuration information, that the cell #2 does not belong to the service area {cell #1, cell #3, cell #4} of the network slice #2, and the AMF may determine, based on the configuration information, that the at least one network slice with the available resource in the cell #2 includes: the network slice #3, the network slice #4, the network slice #5, and the network slice #6.

Specifically, in this embodiment, when the AMF determines that the first cell is outside the service area of the second network slice, to avoid a failure in setting up a subsequent PDU session caused by directly sending a PDU session setup request associated with the second network slice to the access network device, the AMF may determine a third network slice from the at least one network slice with the available resource in the first cell, where a resource configured for the third network slice in the first cell is used to set up a second PDU session, and the second PDU session is used to provide the terminal device with a service provided by the first PDU session. The method procedure shown in FIG. 4 further includes the following step.

S430: The AMF determines the third network slice.

Specifically, in this embodiment, the AMF may select the third network slice from the at least one network slice. It should be noted that there may be one or more third network slices determined by the AMF in this embodiment, that is, the AMF may select a plurality of network slices from the at least one network slice. The resource configured for the third network slice in the first cell may be understood as a resource of the third network slice on a RAN side, or a resource configured for the third network slice on a RAN side.

In this embodiment, a manner in which the AMF selects the third network slice from the at least one network slice is not limited, and includes but is not limited to the following selection manners.
(1) The AMF randomly selects the third network slice from the at least one network slice, where the third network slice is any one or more of the at least one network slice.

For example, the at least one network slice includes the network slice #3, the network slice #4, the network slice #5, and the network slice #6, and the third network slice is any one or more of the network slice #3, the network slice #4, the network slice #5, and the network slice #6.

(2) The AMF selects, as the third network slice, a network slice that has a same SST as the second network slice, where an SST of the third network slice is the same as an SST of the second network slice.

(3) The AMF selects, as the third network slice, a network slice that has a same SD as the second network slice, where an SD of the third network slice is the same as an SD of the second network slice.

For example, the at least one network slice includes the network slice #3, the network slice #4, the network slice #5, and the network slice #6. The SST and/or the SD of the network slice #3 are/is the same as those of the network slice #2, and the third network slice is the network slice #3.

(4) The AMF selects, as the third network slice from the at least one network slice, a network slice that has available resources in all cells within the registration area of the terminal device, where the third network slice has the available resources in all the cells within the registration area of the terminal device.

For example, the at least one network slice includes the network slice #3, the network slice #4, the network slice #5, and the network slice #6. The network slice #4 has available resources in all cells within the registration area of the terminal device (for example, no NS-AoS is configured for the network slice #4, or an NS-AoS configured for the network slice #4 includes all the cells within the registration area of the terminal device), and the third network slice is the network slice #4.

(5) The AMF selects, as the third network slice from the at least one network slice, a network slice in a first network slice group, where the third network slice belongs to the first network slice group, and the first network slice group is associated with one or more network slices.

For example, the at least one network slice includes the network slice #3, the network slice #4, the network slice #5, and the network slice #6. An RA of UE has an NSAG #1, slices associated with the NSAG #1 are the network slice #1 and the network slice #5, and the third network slice is the network slice #5.

(6) The AMF selects, as the third network slice from the at least one network slice, a network slice configured with a largest quantity of resources, where the third network slice is a network slice configured with a largest quantity of resources in the first cell.

For example, the at least one network slice includes the network slice #3, the network slice #4, the network slice #5, and the network slice #6. It can be learned, based on slice resource availability reported by the access network device, that the network slice #6 is a slice with a largest quantity of available resources in the TA identified by the TAC #1, and the third network slice is the network slice #6.

It should be understood that the several manners of determining the third network slice in (1) to (6) are merely examples, and do not constitute any limitation on the protection scope of this application. Another manner in which the AMF selects the third network slice from the determined at least one network slice also falls within the protection scope of this application. For example, the AMF selects the third network slice based on historical communication data. For another example, the foregoing six manners may alternatively be combined to determine the third network slice. For example, the SST of the network slice #3 is the same as that of the network slice #2, and no NS-AoS is configured for neither the network slice #3 nor the network slice #4. If it may be determined, based on the foregoing manner (4), that both the network slice #3 and the network slice #4 meet the condition of having available resources in all cells within the registration area of the terminal device, the AMF may further determine, based on (2), that the network slice #3 is the third network slice. Details are not described herein.

In addition, it should be noted that, in a process of determining the at least one network slice, the AMF may alternatively determine, based on one or more rules in (1) to (6) as the at least one network slice with the available resource in the first cell, a network slice that meets the rules. Details are not described herein again.

For example, it can be learned from the manner of determining the third network slice shown in (6) that the AMF may refer to assistance information reported by the access network device in a process of determining the third network slice. In this case, the method procedure shown in FIG. 4 may further include the following step.

S411: The access network device sends first indication information to the AMF, and correspondingly, the AMF receives the first indication information from the access network device.

The first indication information indicates resource usage of a network slice in at least one tracking area. That the AMF determines the third network slice from the at least one network slice includes: The AMF determines the third network slice from the at least one network slice based on the first indication information.

In this embodiment, the first indication information provided by the access network device may also be understood as indicating resource usage of network slices in different cells.

For example, when an NS-AoS for one or more network slices is configured (for example, configured by the OAM) for the access network device, the access network device reports, to the AMF through NGAP signaling, slice resource availability in each TA. The slice may be all slices in each TA, or may be a slice for which no NS-AOS is configured in each TA (that is, has a resource in each cell in the TA). The resource availability may be represented by a percentage of available resources, or may be represented by indication information indicating whether a resource is congested. Optionally, a congestion degree may be determined based on a preset threshold. This is not limited in this application.

In addition, in this embodiment, determining the third network slice by the AMF may be determining the third network slice in response to trigger information of another device. In this case, the method procedure shown in FIG. 4 may further include the following step.

S412: The access network device or the terminal device sends second indication information to the AMF, and correspondingly, the AMF receives the second indication information from the access network device or the terminal device.

The second indication information indicates the AMF to determine the third network slice. That the AMF determines the third network slice from the at least one network slice includes: The AMF determines the third network slice from the at least one network slice in response to the second indication information.

It can be learned from the foregoing that the resource configured for the third network slice in the first cell is used to set up the second PDU session, and the second PDU session is used to provide the terminal device with the service provided by the first PDU session. In this embodiment, a network slice associated with the second PDU session includes the following two possible implementations.

Implementation 1: The network slice associated with the second PDU session is the second network slice.

In Implementation 1, the method procedure shown in FIG. 4 further includes the following step.

S431: The AMF sends a second message to the access network device, and correspondingly, the access network device receives the second message from the AMF.

The second message is used to request to set up the second PDU session, the second message includes third indication information, and the third indication information indicates that the resource configured for the third network slice in the first cell is used to set up the second PDU session..

For example, the AMF does not update a correspondence between the original S-NSSAI and the alternative S-NSSAI, and indicates the access network device to temporarily use the resource configured for the third network slice in the first cell.

For ease of understanding, a possible form of the second message is described with reference to a specific example.

For example, it is assumed that the second network slice is the network slice #2, the second message is a PDU session resource setup request, and the second message indicates the access network device to set up a resource for a PDU session associated with the network slice #2, and indicates the access network device to use, when preparing an access network device side resource for the PDU session, the resource configured for the third network slice on the access network device (namely, a third indication). For example, the AMF may include the foregoing information in a PDU session resource setup request (PDU session resource setup request) to the access network device. An example of a related information element structure is shown in Table 1.

**Table 1**

| PDU session resource setup request |
|---|
| > Session identifier of a second PDU session |
| >> Network slice #2 associated with the second PDU session |
| >> Third indication information |

It should be understood that the information element structure shown in the table in this embodiment is merely an example, and does not constitute any limitation on the protection scope of this application. For example, the "network slice #2 associated with the second PDU session" carried in the PDU session resource setup request shown in Table 1 may be understood as carried S-NSSAI of the network slice #2, or a carried identifier of the network slice #2. A network slice in the following table (for example, Table 2) may also be understood as S-NSSAI or an identifier of a network slice, and details are not described again.

Implementation 2: The network slice associated with the second PDU session is the third network slice.

In Implementation 2, the method procedure shown in FIG. 4 further includes the following step.

S432: The AMF sends a first message to the access network device, and correspondingly, the access network device receives the first message from the AMF.

The first message is used to request to set up a PDU session associated with the third network slice.

In a possible implementation, the AMF determines to set up the PDU session associated with the second network slice (on the CN side), but indicates the access network device to set up the PDU session resource associated with the third network slice (optionally, if there are a plurality of third network slices, the AMF may determine one third network slice as a finally used network slice, or if there are a plurality of third network slices, the AMF may not need to select one third network slice, but indicate the access network device to respectively set up PDU session resources associated with the plurality of third network slices). The AMF stores a correspondence between an associated slice on the RAN side and an associated slice on the CN side for the PDU session. For example, the AMF includes the foregoing information in the PDU session resource setup request to the access network device. An example of a related information element structure is shown in Table 2.

**Table 2**

| PDU session resource setup request |
|---|
| > Session identifier of a second PDU session |
| >> Third network slice associated with the second PDU session |

In another possible implementation, the AMF updates the alternative S-NSSAI corresponding to the original S-NSSAI. For example, a network slice corresponding to the first network slice is updated to the third network slice.

It can be learned from the foregoing description that, before receiving the first request message, when a resource of the first network slice in the core network is unavailable, the AMF determines that the first network slice corresponds to the second network slice, and sends, to the terminal device, fourth indication information indicating that the first network slice corresponds to the second network slice. In this embodiment, when the AMF determines the third network slice, the AMF may update, from the second network slice to the third network slice, the network slice corresponding to the first network slice.

For example, when the AMF updates the alternative S-NSSAI corresponding to the original S-NSSAI, the AMF sends NAS signaling to the UE. The NAS signaling indicates that the first network slice corresponds to the third network slice.

For example, the first message indicates to set up the PDU session associated with the third network slice. For example, the AMF includes the foregoing information in the PDU session resource setup request to the access network device. A structure of a related information element is shown in the foregoing Table 2.

Further, after the access network device receives the first message or the second message (or the access network device responds to the received first message or the second message), the access network device sets up a data radio bearer. The method procedure shown in FIG. 4 further includes the following step.

S440: The access network device sets up the data radio bearer.

Specifically, the access network device sets up a DRB associated with the third network slice to provide the UE with data transmission through an air interface.

In a possible implementation, corresponding to Implementation 1, the access network device receives the second message, and determines, based on the third indication information in the second message, to set up, using the resource configured for the third network slice in the first cell, the PDU session associated with the second network slice.

In another possible implementation, corresponding to Implementation 2, the access network device receives the first message, and in response to the first message, the access network device sets up, using the resource configured for the third network slice in the first cell, the PDU session associated with the third network slice.

Optionally, if the access network device receives and stores SMBRs of the first network slice (the original S-NSSAI), the second network slice (the alternative S-NSSAI), and the third network slice, the access network device may perform rate control on the PDU session based on a maximum SMBR, a minimum SMBR, or any SMBR in the three. For example, the access network device performs rate control based on the SMBR of the third network slice, or performs rate control based on an SMBR corresponding to a network slice associated with the PDU session.

Optionally, if the access network device receives and stores an SMBR in the SMBRs of the first network slice (the original S-NSSAI), the second network slice (the alternative S-NSSAI), and the third network slice, the access network device performs rate control on the PDU session based on the received SMBR.

In the communication method shown in FIG. 4, when, in response to the received first request message and based on the configuration information, determining that the first cell is located outside the service area of the second network slice, and that there is the at least one network slice with the available resource in the first cell, the AMF determines the third network slice from the at least one network slice. The resource configured for the third network slice in the first cell is used to set up the second PDU session, and the second PDU session is used to provide the terminal device with the service provided by the first PDU session. When the camping cell of the terminal device is outside the service area of the second network slice, the third network slice with the available resource is determined, and the resource configured for the third network slice in the first cell is used to set up the second PDU session, so that the PDU session associated with the network slice is set up, thereby increasing the possibility of successful PDU session setup and reducing service interruption and latency.

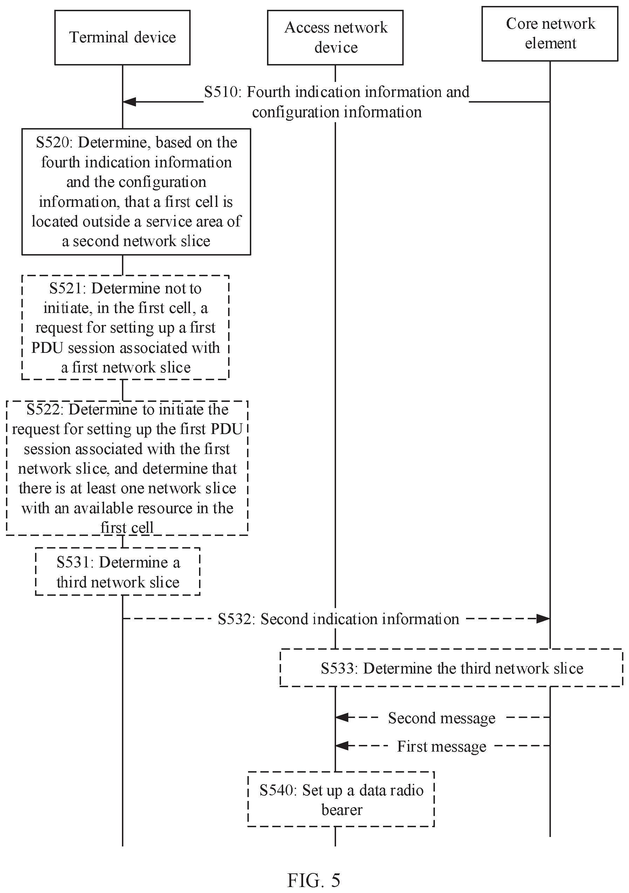

This application further provides a communication method. The terminal device determines the third network slice, or the terminal device determines not to initiate the PDU session setup request. The following describes the communication method in detail with reference to FIG. 5.

FIG. 5 is a schematic flowchart of a communication method according to this application. The following steps are included.

S510: A terminal device receives fourth indication information and configuration information from an AMF, and correspondingly, the AMF sends the fourth indication information and the configuration information to the terminal device.

The fourth indication information indicates that a first network slice corresponds to a second network slice, and the configuration information indicates a network slice area of service configured in a registration area of the terminal device.

It should be understood that an occasion and a manner of sending, by the AMF, the fourth indication information and the configuration information to the terminal device are not limited in this embodiment. For example, the AMF may send the fourth indication information to the terminal device when determining that a resource of the first network slice on the network side encounters congestion or is unavailable. For another example, the AMF may send the configuration information to the terminal device after obtaining the configuration information. In addition, the AMF may send the fourth indication information and the configuration information to the terminal device through one message, or the AMF may send the fourth indication information and the configuration information to the terminal device through different messages. Details are not described herein.

S520: The terminal device determines, based on the fourth indication information and the configuration information, that a first cell is located outside a service area of the second network slice.

Specifically, the first cell is a camping cell of the terminal device.

In this embodiment, before initiating a request for setting up a PDU session associated with the first network slice (namely, an original network slice), the terminal device located in the camping cell (for example, the terminal device moves to the first cell) may first determine, based on NS-AoS information configured for each slice (for example, the configuration information) and a correspondence between the first network slice and the second network slice (for example, the fourth indication information) that are obtained (for example, received from the AMF), that the first cell is not in the service area of the second network slice.

Further, in this embodiment, when the terminal device determines that the first cell is not in the service area of the second network slice, further implementation of the terminal device includes but is not limited to the following possible implementation.

Implementation 3: The terminal device initiates the PDU session for the first network slice in the service area of the second network slice. For example, the terminal device initiates the PDU session for the first network slice only when the terminal device camps on a cell located in an NS-AoS of both the first network slice (original S-NSSAI) and the second network slice (alternative S-NSSAI).

Therefore, when determining that the first cell is not in the service area of the second network slice, the terminal device does not initiate, in the first cell, the request for setting up a first PDU session associated with the first network slice. In Implementation 3, the method procedure shown in FIG. 5 may further include the following step.

S521: The terminal device determines not to initiate, in the first cell, the request for setting up the first PDU session associated with the first network slice.

The request for setting up the first PDU session associated with the first network slice is not initiated in the first cell, so that a subsequent failure in setting up the PDU session can be avoided, and unnecessary resource overheads can be avoided.

Implementation 4: When the terminal device determines to initiate, in the first cell, the request for setting up the first PDU session associated with the first network slice, the terminal device determines, based on the fourth indication information and the configuration information, there is at least one network slice with an available resource in the first cell. In Implementation 4, the method procedure shown in FIG. 5 may further include the following step.

S522: Determine to initiate the request for setting up the first PDU session associated with the first network slice, and determine the at least one network slice with the available resource in the first cell.

Specifically, for a manner in which the terminal device determines the at least one network slice with the available resource in the first cell in this embodiment, refer to the manner in which the AMF determines the at least one network slice with the available resource in the first cell in the communication method shown in FIG. 4. Details are not described herein again.

Further, in this embodiment, after the terminal device determines the at least one network slice with the available resource in the first cell, and initiates the request for setting up the first PDU session associated with the first network slice, subsequent execution manners of the terminal device include the following several possibilities.

Possibility 1: The terminal device determines the third network slice, and notifies the network side (for example, the access network device or the AMF) of the third network slice through second indication information.

Specifically, in the case shown in Possibility 1, the method procedure shown in FIG. 5 further includes the following step.

S531: The terminal device determines the third network slice.

Specifically, for a manner of determining the third network slice by the terminal device in this embodiment, refer to the manner of determining the third network slice by the AMF in the communication method shown in FIG. 4. Details are not described herein again.

In this possible implementation, after determining the third network slice, the terminal device may indicate the third network slice to the network side in the following several possible indication manners (for example, the following Indication manner 1 and Indication manner 2). The method procedure shown in FIG. 5 further includes the following step.

S532: The terminal device sends second indication information to the AMF or the access network device.

The second indication information indicates the third network slice in the at least one network slice. The resource configured for the third network slice in the first cell is used to set up a second PDU session. For example, the second indication information carries an identifier of the third network slice, and the second indication information may indicate to use a resource of the third network slice on the RAN side to provide the second PDU session with a service.

Possibility 2: The terminal device indicates the network side to determine the third network slice.

Specifically, in the case shown in Possibility 2, the method procedure shown in FIG. 5 further includes S532. A difference lies in that in the case shown in Possibility 2, the second indication information indicates the network side (for example, the access network device or the AMF) to determine the third network slice. The resource configured for the third network slice in the first cell is used to set up the second PDU session, and the second PDU session is used to provide the terminal device with a service provided by the first PDU session.

For example, when the second indication information indicates to determine the third network slice, after receiving the second indication information, the network side determines the third network slice in response to the second indication information. The method procedure shown in FIG. 5 further includes the following step.

S533: The AMF or the access network device determines the third network slice.

In a possible implementation, the AMF determines the third network slice.

In this implementation, for a manner in which the AMF determines the third network slice, refer to the manner in which the AMF determines the third network slice after receiving the first request message in the communication method shown in FIG. 4.

Optionally, in this embodiment, after receiving the second indication information, the AMF may directly determine the third network slice in response to the second indication information, and does not need to determine that the first cell is outside the service area of the second network slice. For example, after receiving the second indication information, the AMF determines, as third network slices based on the configuration information, one or more network slices that have available resources in the first cell.

Optionally, in this embodiment, a manner in which the AMF determines the third network slice after receiving the second indication information is the same as the manner in which the AMF determines the third network slice after receiving the first request message in the communication method shown in FIG. 4. Similarly, based on the configuration information, the AMF determines that the first cell is located outside the service area of the second network slice, and that there is the at least one network slice with the available resource in the first cell.

In another possible implementation, the access network device determines the third network slice.

In this implementation, for a manner in which the access network device determines the third network slice, refer to the manner in which the AMF determines the third network slice after receiving the first request message in the communication method shown in FIG. 4.

Optionally, in this embodiment, after receiving the second indication information, the access network device may directly determine the third network slice in response to the second indication information, and does not need to determine that the first cell is outside the service area of the second network slice. For example, after receiving the second indication information, the access network device determines, as the third network slices based on the configuration information, the one or more network slices that have available resources in the first cell.

Optionally, in this embodiment, a manner in which the access network device determines the third network slice after receiving the second indication information is the same as the manner in which the AMF determines the third network slice after receiving the first request message in the communication method shown in FIG. 4. Similarly, based on the configuration information, the access network device determines that the first cell is located outside the service area of the second network slice, and that there is the at least one network slice with the available resource in the first cell.

It should be understood that in the manner of determining the third network slice by the AMF, for a subsequent procedure after the AMF determines the third network slice, refer to a procedure after the AMF determines the third network slice in the communication method shown in FIG. 4. Details are not described herein again. For example, the access network device is indicated to set up the second PDU session through the first message or the second message.

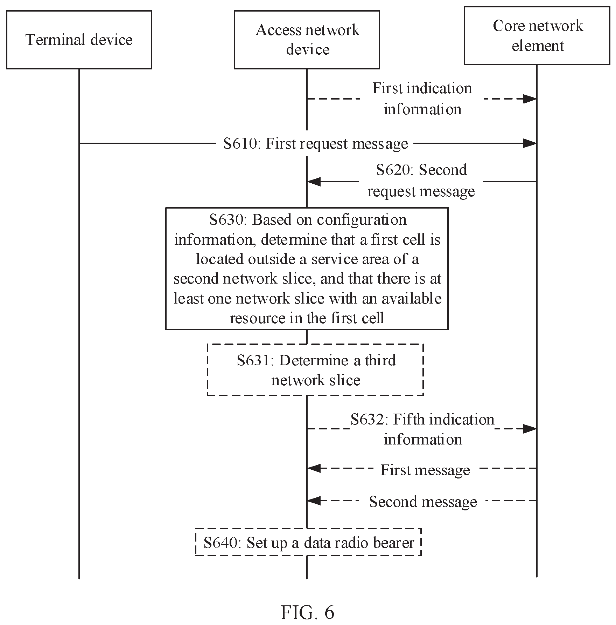

For a subsequent procedure after the access network device determines the third network slice in this embodiment, refer to a manner in which the access network device determines the third network slice shown in FIG. 6 in the following. Details are not described herein again.

Indication manner 1: The terminal device first indicates the third network slice to the AMF through the second indication information (for example, when the terminal device determines the third network slice), or indicates, through the second indication information, the AMF to determine the third network slice (for example, when the terminal device does not determine the third network slice). Then, the AMF indicates the third network slice to the access network device.

For example, the second indication information is carried in the PDU session setup request. For example, when initiating a PDU session request associated with the first network slice, the terminal device includes an identifier of the first network slice and an identifier of the second network slice in the PDU session setup request. In addition, in Indication manner 1, the PDU session setup request further carries the second indication information. The second indication information indicates to use the resource configured for the third network slice on the access network device side to set up an access network device side resource for the second PDU session, or indicates the AMF to determine the third network slice for the access network device side for use by the PDU session associated with the second network slice. A schematic NAS message information element structure is shown in the following Table 3.

**Table 3**

| |
|---|
| > PDU session setup request |
| > Identifier of a first network slice and identifier of a second network slice |
| > Second indication information |

Optionally, in the case shown in Indication manner 1, if the terminal device expects the AMF to update, from the second network slice to the third network slice, a network slice corresponding to the first network slice, the second indication information may further indicate to update, from the second network slice to the third network slice, the network slice corresponding to the first network slice.

For example, when initiating the PDU session request associated with the first network slice, the terminal device includes the identifier of the first network slice and the identifier of the second network slice in the PDU session setup request. In addition, in Indication manner 1, the PDU session setup request further carries the second indication information. In addition to indicating the third network slice or indicating to determine the third network slice, the second indication information further indicates the AMF to update, from the second network slice to the third network slice, the network slice corresponding to the first network slice. Alternatively,
when the second indication information indicates the AMF to determine the third network slice, after determining the third network slice, the AMF updates, from the second network slice to the third network slice, the network slice corresponding to the first network slice, and the second indication information does not need to additionally indicate to update, from the second network slice to the third network slice, the network slice corresponding to the first network slice.

Further, after receiving the second indication information, the AMF may directly obtain, through reading, the third network slice from the second indication information, that is, the second indication information indicates the third network slice. Alternatively, after receiving the second indication information, the AMF determines the third network slice in response to the second indication information.

Specifically, for a procedure after the AMF determines the third network slice, refer to the communication method shown in FIG. 4. Details are not described herein again.

Indication manner 2: The terminal device indicates the third network slice to the access network device through the second indication information (for example, when the terminal device determines the third network slice), or indicates, through the second indication information, the access network device to determine the third network slice (for example, when the terminal device does not determine the third network slice).

For example, the second indication information is carried in an RRC message, the RRC message includes an uplink NAS message, and the uplink NAS message includes a PDU session setup request message. For example, when initiating the request of setting up the PDU session associated with the first network slice, the terminal device includes the identifiers of the first network slice and the second network slice in the PDU session setup request, and indicates, through the RRC message carrying the PDU session setup request, the access network device side to use the resource configured for the third network slice on the access network device side to set up an access network device side resource for the PDU session, or indicates, through the RRC message, the access network device to determine the third network slice for use by the PDU session associated with the second network slice.

For example, the RRC message may be uplink message transfer (UL information transfer), and the second indication information in the RRC may be associated with an ID of the PDU session. A schematic information element structure is shown in the following Table 4.

**Table 4**

| UL information transfer |
|---|
| > NAS message (requests of setting up PDU sessions associated with a first network slice and a second network slice) |
| > Second indication information |

In Indication manner 2, the access network device transparently transmits the PDU session setup request (for example, the NAS message) to the AMF through NGAP signaling.

For example, the access network device may send the PDU session setup request to the AMF through uplink NAS transport (UL NAS Transport). After receiving the PDU session setup request, the AMF may indicate, based on a correspondence between the first network slice and the second network slice, the access network device to set up the PDU session resource associated with the second network slice. After receiving the indication of the AMF, the access network device sets up the PDU session based on the second indication information previously received from the terminal device side using the resource configured for the third network slice on the access network device side.

S540: The access network device sets up a data radio bearer.

Refer to the description of step S440 in the communication method shown in FIG. 4. Details are not described herein again.

In the communication method shown in FIG. 5, when the terminal device determines to initiate, in the first cell, the request for setting up the first PDU session associated with the first network slice, the terminal device may determine, based on the received information (for example, the fourth indication information and the configuration information), that the first cell is located outside the service area of the second network slice corresponding to the first network slice, and that there is the at least one network slice with the available resource in the first cell. Further, the terminal device indicates the third network slice in the at least one network slice through the second indication information, or indicates the network side (for example, the access network device or the core network element) to determine the third network slice. The resource configured for the third network slice in the first cell is used to set up the second PDU session, and the second PDU session is used to provide the terminal device with the service provided by the first PDU session. When the camping cell of the terminal device is outside the service area of the second network slice, the third network slice with the available resource is determined, and the resource configured for the third network slice in the first cell is used to set up the second PDU session, so that the PDU session associated with the network slice is set up, thereby increasing the possibility of successful PDU session setup and reducing service interruption and latency.

Alternatively, the terminal device determines not to initiate PDU session setup, to avoid a subsequent failure in setting up the PDU session and avoid unnecessary resource overheads.

This application further provides a communication method. The access network device determines the third network slice. The following describes the communication method in detail with reference to FIG. 6.

FIG. 6 is a schematic flowchart of a communication method according to this application. The following steps are included.

S610: A terminal device sends a first request message to an AMF, and correspondingly, the AMF receives the first request message from the terminal device.

Refer to the description of step S410 in FIG. 4. Details are not described herein again.

S620: The AMF sends a second request message to an access network device, and correspondingly, the access network device receives the second request message from the AMF.

The second request message is used to request to set up, in a first cell, a PDU session associated with a second network slice. For example, the AMF indicates, through a PDU session resource setup request, the access network device to set up the PDU session associated with the second network slice.

In this embodiment, after the access network device receives the second request message (or the access network device responds to the received second request message), the access network device may determine, based on obtained configuration information, that the first cell is located outside a service area of the second network slice, and that there is at least one network slice with an available resource in the first cell. The method procedure shown in FIG. 6 further includes the following steps.

S630: Based on the configuration information, the access network device determines that the first cell is located outside the service area of the second network slice, and that there is the at least one network slice with the available resource in the first cell.

Specifically, for a manner in which the access network device determines the at least one network slice with the available resource in the first cell in this embodiment, refer to the manner in which the AMF determines the at least one network slice with the available resource in the first cell in the communication method shown in FIG. 4. Details are not described herein again.

Optionally, when an NS-AoS for one or more network slices is configured (for example, configured by OAM) for the access network device, the access network device reports slice resource availability in each TA to the AMF through NGAP signaling. For example, the access network device sends first indication information to the AMF, where the first indication information indicates resource usage of a network slice in at least one tracking area, or the first indication information indicates resource usage of network slices in different cells.

For example, in this embodiment, a subsequent procedure performed after the access network device determines that the first cell is located outside the service area of the second network slice and that there is the at least one network slice with the available resource in the first cell includes the following two possible implementations.

In a possible implementation, the access network device determines a third network slice from the at least one network slice, where a resource configured for the third network slice in the first cell is used to set up the PDU session associated with the second network slice.

In this implementation, the method procedure shown in FIG. 6 further includes:

S631: The access network device determines the third network slice.

The access network device determines the third network slice from the at least one network slice, where the resource configured for the third network slice in the first cell is used to set up the PDU session associated with the second network slice, and the PDU session associated with the second network slice is used to provide the terminal device with a service provided by the first PDU session.

For example, based on the configuration information (for example, NS-AoS information configured for each slice), the access network device may learn that the first cell on which the terminal device currently camps is located outside the NS-AoS of the second network slice (alternative S-NSSAI), and that there is another slice (for example, the third network slice) with an available resource in the first cell. The access network device may set up, using an access network device side resource of the third network slice, the PDU session associated with the second network slice.

In another possible implementation, the access network device indicates, through fifth indication information, the AMF to determine the third network slice.

In this implementation, the method procedure shown in FIG. 6 further includes:

S632: The access network device sends the fifth indication information to the AMF.

The fifth indication information indicates the third network slice or indicate the AMF to determine the third network slice.

For example, based on the configuration information (for example, the NS-AoS information configured for each slice), the access network device learns that the first cell on which the terminal device currently camps is located outside the NS-AoS of the second network slice (the alternative S-NSSAI), and that another slice (for example, a network slice other than the first network slice and the second network slice) has an available resource in the first cell. The access network device indicates, through the fifth indication information (for example, included in an NGAP message, where the fifth indication information may be associated with an ID of a PDU session), the AMF to determine the third network slice. For subsequent actions of the AMF, refer to FIG. 4.

Optionally, in this implementation, the fifth indication information may further indicate the AMF to update, from the second network slice to the third network slice, a network slice corresponding to the first network slice. After updating, from the second network slice to the third network slice based on the indication, the network slice corresponding to the first network slice, the AMF may indicate the access network device to change, to the third network slice, a slice associated with the current PDU session. Alternatively,
when the fifth indication information indicates the AMF to determine the third network slice, after determining the third network slice, the AMF updates, from the second network slice to the third network slice, the network slice corresponding to the first network slice, and the fifth indication information does not need to additionally indicate to update, from the second network slice to the third network slice, the network slice corresponding to the first network slice.

For example, the NGAP message may be a PDU session resource setup response or uplink NAS transport. A schematic information element structure is shown in Table 5 or Table 6.

**Table 5**

| PDU session resource setup response |
|---|
| > Session identifier of a second PDU session |
| >> Fifth indication information |

**Table 6**

| Uplink NAS transport |
|---|
| > AMF UE NGAP ID |
| > RAN UE NGAP ID |
| > NAS PDU |
| > Fifth indication information |

S640: The access network device sets up a data radio bearer.

Refer to the description of step S440 in the communication method shown in FIG. 4. Details are not described herein again.

In the communication method shown in FIG. 6, after receiving the second request message, based on the configuration information, the access network device determines that the first cell is located outside the service area of the second network slice corresponding to the first network slice, and that there is the at least one network slice with the available resource in the first cell. In this way, in a process of setting up the DRB, the access network device may set up a DRB associated with the third network slice in the at least one network slice instead of a DRB associated with the second network slice, and set up, using a resource of the third network slice with the available resource, a PDU session associated with the network slice, so that the PDU session associated with the network slice is set up, thereby increasing the possibility of successful PDU session setup and reducing service interruption and latency.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, an AMF, UE, and a gNB) in an existing network architecture is mainly used as an example for description. It should be understood that a specific form of the device is not limited in embodiments of this application. For example, all devices that can implement a same function in the future are applicable to embodiments of this application.

It may be understood that, in the foregoing method embodiments, methods and operations implemented by the device (for example, an AMF, UE, and a gNB) may alternatively be implemented by a component (for example, a chip or a circuit) of the device.

The foregoing describes in detail the communication methods provided in embodiments of this application with reference to FIG. 4 to FIG. 6. The foregoing communication method is mainly described from a perspective of interaction between protocol layers of a terminal device. It can be understood that, to implement the foregoing functions, a terminal device includes a corresponding hardware structure and/or software module for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

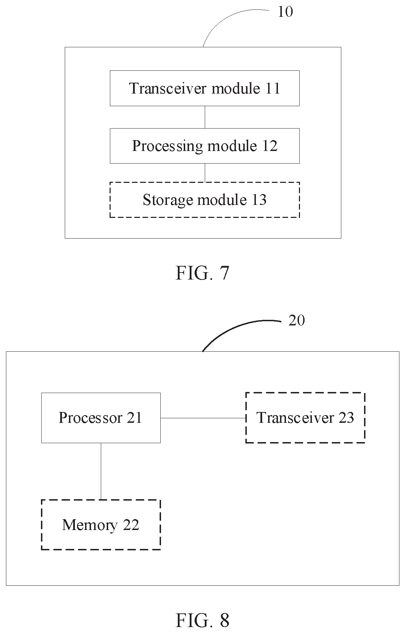

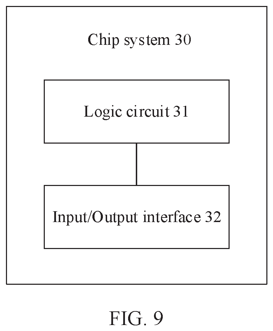

The following describes in detail the communication apparatus provided in this application with reference to FIG. 7 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of software functional module. It should be noted that, in embodiments of this application, module division is an example, and is merely a logical function division. In actual implementation, another division manner may be used. An example in which each functional module is obtained through division based on each corresponding function is used below for description.

FIG. 7 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of a device in the foregoing method embodiments.

In a design, the apparatus 10 may correspond to the AMF in the foregoing method embodiments, or may be a component (for example, a chip) of the AMF.

The apparatus 10 may implement corresponding steps or procedures performed by the AMF in the foregoing method embodiments. The transceiver module 11 may be configured to perform receiving-related and sending-related operations of the AMF in the foregoing method embodiments, and the processing module 12 may be configured to perform processing-related operations of the AMF in the foregoing method embodiments.

In a possible implementation, the transceiver module 11 is configured to receive a first request message from a terminal device, where the first request message is used to request to set up a first protocol data unit PDU session associated with a first network slice, and the first request message includes an identifier of the first network slice and an identifier of a second network slice. The processing module 12 is configured to: determine, based on configuration information and in response to the first request message, that a first cell is located outside a service area of the second network slice, and that there is at least one network slice with an available resource in the first cell, where the configuration information indicates a network slice area of service configured in a registration area of the terminal device, and the first cell is a camping cell of the terminal device. The processing module 12 is configured to determine a third network slice from the at least one network slice, where a resource configured for the third network slice in the first cell is used to set up a second PDU session, and the second PDU session is used to provide the terminal device with a service provided by the first PDU session.

In another possible implementation, the transceiver module 11 is configured to receive second indication information, where the second indication information indicates the third network slice, or the second indication information indicates to determine the third network slice, and the third network slice is a network slice with an available resource in the first cell. The processing module 12 is configured to determine the third network slice in response to the second indication information, where the resource configured for the third network slice in the first cell is used to set up the second protocol data unit PDU session, the second PDU session is used to provide the terminal device with the service provided by the first PDU session, the first cell is located outside the service area of the second network slice, the first PDU session is a PDU session that is associated with the first network slice and that the terminal device requests to set up, the first network slice corresponds to the second network slice, and the first cell is a camping cell of the terminal device.

When the apparatus 10 is configured to perform the method in FIG. 4, the transceiver module 11 may be configured to perform steps of receiving and sending information in the method, for example, steps S411, S412, S410, S431, and S432; and the processing module 12 may be configured to perform processing steps in the method, for example, steps S420 and S430.

When the apparatus 10 is configured to perform the method in FIG. 5, the transceiver module 11 may be configured to perform steps of receiving and sending information in the method, for example, steps S510 and S532, and the processing module 12 may be configured to perform a processing step in the method, for example, step S533.

When the apparatus 10 is configured to perform the method in FIG. 6, the transceiver module 11 may be configured to perform steps of receiving and sending information in the method, for example, steps S610 and S620; and the processing module 12 may be configured to perform a processing step in the method.

It should be understood that a specific process in which the units perform the foregoing corresponding steps is described in detail in the foregoing method embodiments, and for brevity, details are not described herein.

In another design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving-related and sending-related operations of the terminal device in the foregoing method embodiments, and the processing module 12 may be configured to perform a processing-related operation of the terminal device in the foregoing method embodiments.

In a possible implementation, the transceiver module 11 is configured to receive fourth indication information and configuration information, where the fourth indication information indicates that the first network slice corresponds to the second network slice, and the configuration information indicates a network slice area of service configured in the registration area of the terminal device. The processing module 12 is configured to: when determining to initiate, in a first cell, a request for setting up a first protocol data unit PDU session associated with the first network slice, determine, based on the fourth indication information and the configuration information, that the first cell is located outside a service area of the second network slice, and that there is at least one network slice with an available resource in the first cell, where the first cell is a camping cell of the terminal device. The transceiver module 11 is configured to send second indication information, where the second indication information indicates a third network slice in the at least one network slice, or the second indication information indicates to determine the third network slice, a resource configured for the third network slice in the first cell is used to set up a second PDU session, and the second PDU session is used to provide the terminal device with a service provided by the first PDU session.

In a possible implementation, the transceiver module 11 is configured to receive fourth indication information and configuration information, where the fourth indication information indicates that the first network slice corresponds to the second network slice, and the configuration information indicates a network slice area of service configured in the registration area of the terminal device. The processing module 12 is configured to: when determining, based on the fourth indication information and the configuration information, that the first cell is located outside the service area of the second network slice, not initiate, in the first cell, a request for setting up a first protocol data unit PDU session associated with the first network slice.

When the apparatus 10 is configured to perform the method in FIG. 4, the transceiver module 11 may be configured to perform steps of receiving and sending information in the method, for example, steps S410 and S412; and the processing module 12 may be configured to perform a processing step in the method.

When the apparatus 10 is configured to perform the method in FIG. 5, the transceiver module 11 may be configured to perform steps of receiving and sending information in the method, for example, steps S510 and S532; and the processing module 12 may be configured to perform processing steps in the method, for example, steps S520, S521, S522, and S531.

When the apparatus 10 is configured to perform the method in FIG. 6, the transceiver module 11 may be configured to perform a step of receiving and sending information in the method, for example, step S610; and the processing module 12 may be configured to perform a processing step in the method.

It should be understood that a specific process in which the units perform the foregoing corresponding steps is described in detail in the foregoing method embodiments, and for brevity, details are not described herein.

In still another design, the apparatus 10 may correspond to the access network device in the foregoing method embodiments, or may be a component (for example, a chip) of the access network device.

The apparatus 10 may implement corresponding steps or procedures performed by the access network device in the foregoing method embodiment. The transceiver module 11 may be configured to perform receiving-related and sending-related operations of the access network device in the foregoing method embodiments, and the processing module 12 may be configured to perform a processing-related operation of the access network device in the foregoing method embodiments.

In a possible implementation, the transceiver module 11 is configured to receive a second request message, where the second request message is used to request to set up, in a first cell, a protocol data unit PDU session associated with a second network slice. The processing module 12 is configured to: determine, based on configuration information, that the first cell is located outside a service area of the second network slice, and that there is at least one network slice with an available resource in the first cell, where the configuration information indicates a network slice area of service configured in a registration area of the terminal device. The processing module 12 is configured to set up a data radio bearer DRB associated with a third network slice in the at least one network slice, where the DRB is used to provide the terminal device with data transmission through an air interface, the first cell is a camping cell of the terminal device, the first cell is located outside the service area of the second network slice, and a resource configured for the third network slice in the first cell is used to set up a PDU session associated with the second network slice.

When the apparatus 10 is configured to perform the method in FIG. 4, the transceiver module 11 may be configured to perform steps of receiving and sending information in the method, for example, steps S412, S411, S431, and S432; and the processing module 12 may be configured to perform a processing step in the method, for example, step S440.

When the apparatus 10 is configured to perform the method in FIG. 5, the transceiver module 11 may be configured to perform steps of receiving and sending information in the method, and the processing module 12 may be configured to perform a processing step in the method, for example, step S540.

When the apparatus 10 is configured to perform the method in FIG. 6, the transceiver module 11 may be configured to perform steps of receiving and sending information in the method, for example, step S620 and step S632; and the processing module 12 may be configured to perform processing steps in the method, for example, steps S630, S631, and S640.

It should be understood that a specific process in which the units perform the foregoing corresponding steps is described in detail in the foregoing method embodiments, and for brevity, details are not described herein.

It should be further understood that the apparatus 10 herein is presented in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by devices (such as a terminal device, an access network device, and a core network element) in the foregoing methods. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 8 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 and the processor 21 may be integrated together, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive a signal and/or send a signal.

In a solution, the apparatus 20 is configured to implement operations performed by the AMF in the foregoing method embodiments.

In another solution, the apparatus 20 is configured to implement the operations performed by the terminal device in the foregoing method embodiments.

In still another solution, the apparatus 20 is configured to implement operations performed by the access network device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 9 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement the operations performed by the AMF, the terminal device, or the access network device in the various method embodiments described above.

For example, the logic circuit 31 is configured to implement a processing-related operation performed by the AMF, the terminal device, or the access network device in the foregoing method embodiments, and the input/output interface 32 is configured to implement a sending-and/or receiving-related operation performed by the AMF, the terminal device, or the access network device in the foregoing method embodiments.

An embodiment of this application further provides a computer-readable storage medium, where the computer-readable storage medium stores computer instructions used to implement the method performed by the AMF, the terminal device, or the access network device in the foregoing method embodiments.

For example, when a computer program is executed by a computer, the computer is enabled to implement the method performed by the AMF, the terminal device, or the access network device in the foregoing method embodiments.

An embodiment of this application further provides a computer program product, including instructions. When the instructions are executed by a computer, the method performed by the AMF, the terminal device, or the access network device in the foregoing method embodiments is implemented.

An embodiment of this application further provides a communication system, including the foregoing AMF and the foregoing access network device. Optionally, the communication system further includes the foregoing terminal device.

For explanations and beneficial effect of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a first request message from a terminal device, wherein the first request message is used to request to set up a first protocol data unit PDU session associated with a first network slice, and the first request message comprises an identifier of the first network slice and an identifier of a second network slice;
determining, based on configuration information and in response to the first request message, that a first cell is located outside a service area of the second network slice, and that there is at least one network slice with an available resource in the first cell, wherein the configuration information indicates a network slice area of service configured in a registration area of the terminal device, and the first cell is a camping cell of the terminal device; and
determining a third network slice from the at least one network slice, wherein a resource configured for the third network slice in the first cell is used to set up a second PDU session, and the second PDU session is used to provide the terminal device with a service provided by the first PDU session.

2. The method according to claim 1, wherein the method further comprises:
receiving first indication information, wherein the first indication information indicates resource usage of a network slice in at least one tracking area; and
determining the third network slice from the at least one network slice comprises:
determining the third network slice from the at least one network slice based on the first indication information.

3. The method according to claim 1 or 2, wherein the method further comprises:
receiving second indication information, wherein the second indication information indicates to determine the third network slice; and
determining the third network slice from the at least one network slice comprises:
determining the third network slice from the at least one network slice in response to the second indication information.

4. The method according to any one of claims 1 to 3, wherein the first network slice corresponds to the second network slice; and
when the third network slice is determined from the at least one network slice, the method further comprises:
updating, from the second network slice to the third network slice, a network slice corresponding to the first network slice.

5. The method according to any one of claims 1 to 4, wherein the second PDU session is a PDU session associated with the third network slice; and the method further comprises:
sending a first message, wherein the first message is used to request to set up the PDU session associated with the third network slice.

6. The method according to any one of claims 1 to 3, wherein the second PDU session is a PDU session associated with the second network slice; and the method further comprises:
sending a second message, wherein the second message is used to request to set up the second PDU session, the second message comprises third indication information, and the third indication information indicates that the resource configured for the third network slice in the first cell is used to set up the second PDU session..

7. The method according to any one of claims 1 to 6, wherein the third network slice meets at least one of the following conditions:
a slice service type SST and/or a slice differentiator SD of the third network slice are/is the same as an SST and/or an SD of the second network slice; or
the third network slice has available resources in all cells within the registration area of the terminal device; or
the third network slice belongs to a first network slice group, and the first network slice group is associated with one or more network slices; or
the third network slice is a network slice configured with a largest quantity of resources in the first cell.

8. A communication method, comprising:
receiving a second message, wherein the second message is used to request to set up a protocol data unit PDU session associated with a second network slice, the second message comprises third indication information, the third indication information indicates that a resource configured for a third network slice in a first cell is used to set up the PDU session associated with the second network slice, and the third network slice is determined by a core network element from at least one network slice with an available resource in the first cell, based on configuration information, when it is determined that the first cell is located outside the service area of the second network slice; and
setting up a data radio bearer DRB associated with the third network slice, wherein the DRB is used to provide a terminal device with data transmission through an air interface; and
the configuration information indicates a network slice area of service configured in a registration area of the terminal device, and the first cell is a camping cell of the terminal device.

9. The method according to claim 8, wherein the method further comprises:
controlling a data transmission rate based on any one of a slice maximum bit rate SMBR of a first network slice, an SMBR of the second network slice, or an SMBR of the third network slice, wherein the first network slice corresponds to the second network slice.

10. The method according to claim 8 or 9, wherein the method further comprises:
sending first indication information, wherein the first indication information indicates resource usage of a network slice in at least one tracking area.

11. A communication system, comprising a core network element and an access network device, wherein
the core network element is configured to receive a first request message from a terminal device, wherein the first request message is used to request to set up a first protocol data unit PDU session associated with a first network slice, and the first request message comprises an identifier of the first network slice and an identifier of a second network slice;
the core network element is further configured to: determine, based on configuration information and in response to the first request message, that a first cell is located outside a service area of the second network slice, and that there is at least one network slice with an available resource in the first cell, wherein the configuration information indicates a network slice area of service configured in a registration area of the terminal device, and the first cell is a camping cell of the terminal device;
the core network element is further configured to determine a third network slice from the at least one network slice, wherein a resource configured for the third network slice in the first cell is used to set up a second PDU session, and the second PDU session is used to provide the terminal device with a service provided by the first PDU session;
the access network device is configured to receive a second message from the core network element, wherein the second message is used to request to set up the second PDU session, the second message comprises third indication information, and the third indication information indicates that the resource configured for the third network slice in the first cell is used to set up the second PDU session; and
the access network device is further configured to set up a data radio bearer DRB associated with the third network slice, wherein the DRB is used to provide the terminal device with data transmission through an air interface.

12. A communication method, comprising:
receiving fourth indication information and configuration information, wherein the fourth indication information indicates that a first network slice corresponds to a second network slice, and the configuration information indicates a network slice area of service configured in a registration area of a terminal device;
when the terminal device determines to initiate a request for setting up a first protocol data unit PDU session associated with the first network slice in a first cell, determining, based on the fourth indication information and the configuration information, that the first cell is located outside a service area of the second network slice, and that there is at least one network slice with an available resource in the first cell, wherein the first cell is a camping cell of the terminal device; and
sending second indication information, wherein the second indication information indicates a third network slice in the at least one network slice, or the second indication information indicates to determine the third network slice; and
a resource configured for the third network slice in the first cell is used to set up a second PDU session, and the second PDU session is used to provide the terminal device with a service provided by the first PDU session.

13. The method according to claim 12, wherein when the second indication information indicates the third network slice in the at least one network slice, the method further comprises:
determining the third network slice from the at least one network slice.

14. The method according to claim 12 or 13, wherein the second indication information further indicates to update, from the second network slice to the third network slice, a network slice corresponding to the first network slice.

15. The method according to any one of claims 12 to 14, wherein the third network slice meets at least one of the following conditions:
a slice service type SST and/or a slice differentiator SD of the third network slice are/is the same as an SST and/or an SD of the second network slice; or
the third network slice has available resources in all cells within the registration area of the terminal device; or
the third network slice belongs to a first network slice group, and the first network slice group is associated with one or more network slices; or
the third network slice is a network slice configured with a largest quantity of resources in the first cell.

16. A communication method, comprising:
receiving second indication information, wherein the second indication information indicates a third network slice, or the second indication information indicates to determine the third network slice, and the third network slice is a network slice with an available resource in a first cell; and
in response to the second indication information, determining the third network slice, wherein a resource configured for the third network slice in the first cell is used to set up a second protocol data unit PDU session, and the second PDU session is used to provide a terminal device with a service provided by a first PDU session; and
the first cell is located outside a service area of a second network slice, the first PDU session is a PDU session that is associated with a first network slice and that the terminal device requests to set up, the first network slice corresponds to the second network slice, and the first cell is a camping cell of the terminal device.

17. The method according to claim 16, wherein when the second indication information indicates to determine the third network slice, the method further comprises:
determining, based on configuration information, that the first cell is located outside the service area of the second network slice, and that there is at least one network slice with an available resource in the first cell, wherein the configuration information indicates a network slice area of service configured in a registration area of the terminal device; and
determining the third network slice from the at least one network slice.

18. The method according to claim 17, wherein the method further comprises:
updating, from the second network slice to the third network slice, a network slice corresponding to the first network slice.

19. The method according to any one of claims 16 to 18, wherein the second PDU session is a PDU session associated with the second network slice; and the method further comprises:
sending a second message, wherein the second message is used to request to set up the second PDU session, the second message comprises third indication information, and the third indication information indicates that the resource configured for the third network slice in the first cell is used to set up the second PDU session.

20. The method according to any one of claims 16 to 18, wherein the second indication information further indicates to update, from the second network slice to the third network slice, the network slice corresponding to the first network slice, and the second PDU session is a PDU session associated with the third network slice; and the method further comprises:
sending a first message, wherein the first message is used to request to set up the PDU session associated with the third network slice.

21. The method according to claim 16 or 17, wherein the method further comprises:
setting up a data radio bearer DRB associated with the third network slice, wherein the DRB is used to provide the terminal device with data transmission through an air interface.

22. A communication apparatus, wherein the communication apparatus comprises a processor and a memory, the processor is coupled to the memory, the memory is configured to store a computer program, and when the processor runs the computer program, the communication apparatus is enabled to perform the method according to any one of claims 1 to 21.

23. A computer-readable storage medium, wherein the computer-readable storage medium stores computer instructions, and when the computer instructions are run on a communication apparatus, the communication apparatus is enabled to perform the method according to any one of claims 1 to 21.

24. A computer program product, comprising computer instructions, wherein when the computer instructions are run on a communication apparatus, the communication apparatus is enabled to perform the method according to any one of claims 1 to 21.

25. A chip, wherein the chip comprises a processor and a communication interface, the processor reads instructions through the communication interface and runs the instructions, and when the chip is mounted in a communication apparatus, the communication apparatus is enabled to perform the method according to any one of claims 1 to 21.

26. A communication system, wherein the communication system comprises a terminal device and a network device, and the terminal device is configured to perform the method according to any one of claims 1 to 21.
